# EUROPEAN PATENT APPLICATION

(11) **EP 4 726 001 A1**
(43) Date of publication of application: **15.04.2026**
(21) Application number: 24206411.1
(22) Date of filing: 14.10.2024
(51) Int. Cl.: C09D 133/14

(54) **COMPOSITIONS COMPRISING WATER FILM FORMING COPOLYMERS FOR ANTI-FOGGING COATING OF SUBSTRATES**

(71) Applicant: Albert-Ludwigs-Universität Freiburg, 79098 Freiburg (DE)
(72) Inventor: Bleiziffer, Alexander, 79104 Freiburg (DE); Rühe, Jürgen, 79356 Eichstetten (DE); Scherag, Frank Daniel, 79114 Freiburg (DE)
(74) Representative: Hertin und Partner Rechts- und Patentanwälte PartG mbB

(57) **Abstract**

The invention relates to a water-film forming coating composition comprising (a.) a copolymer, wherein the copolymer comprises one or more structural units derived from a monomer comprising an ionic moiety (ionic monomer) and one or more structural units derived from a monomer comprising a diazo ester moiety (crosslinkable monomer), and (b.) water and/or an alcohol. The invention further relates to a method for depositing an water-film forming coating to a substrate, the method comprising (i.) provision of a substrate, (ii.) provision of a composition according to the invention, (iii) application of the composition to the surface of the substrate, and (iv.) exposing the substrate to light of a wavelength of 250 to 500 nm, preferably 365 to 450 nm, more preferably 380 nm to 430 nm. The invention further relates to a substrate coated by the composition obtainable by the method and the use of said coating composition as an anti-fogging coating for glass, glasses, safety glasses, a car windshield, a car pane, a window, a mirror, a visor, a camera lens, a microscope lens, a car headlight, a solar panel, a medical device such as an endoscope and a surgical instrument, a shower door, a bathroom tile, a greenhouse panel, and/or a face shield and as a primer for a water-based coating.

## Description

The invention is in the field of chemistry, in particular in the field of polymers and coating compositions for surfaces of substrates, in particular coating compositions for providing anti-fogging properties.

The invention relates to a water-film forming coating composition comprising a copolymer, wherein the copolymer comprises a structural unit derived from an ionic monomer and a structural unit derived from a crosslinkable monomer comprising a diazo ester moiety. The invention further relates to a water-film forming coating composition comprising a copolymer, wherein the copolymer comprises a structural unit derived from an ionic monomer and a structural unit derived from a crosslinkable monomer comprising a diazo ester moiety and a hydrophilic linker.

The invention further relates to a water-film forming coating composition comprising (a.) a copolymer, wherein the copolymer comprises one or more structural units derived from a monomer comprising an ionic moiety (ionic monomer) and one or more structural units derived from a monomer comprising a diazo ester moiety (crosslinkable monomer), and (b.) a solvent comprising water and/or an alcohol.

The invention further relates to a crosslinkable monomer comprising a diazo ester moiety, a hydrophilic linker and a polymerizable moiety, wherein the polymerizable moiety is selected from the group consisting of an acrylate and a methacrylate. The invention preferably relates to a crosslinkable monomer, wherein the diazo ester moiety is a nitro-substituted phenyl diazo ester moiety and the hydrophilic linker is a linear polyethylene glycol (PEG).

The invention further relates to a method for depositing a water-film forming coating to a substrate, the method comprising application of the composition to the surface of a substrate and exposing the substrate to light of a wavelength of 250 to 500 nm.

The invention further relates to a method for depositing an water-film forming coating to a substrate, the method comprising (i.) provision of a substrate, (ii.) provision of a composition according to any one of claims 1 to 10, (iii) application of the composition to the surface of the substrate, and (iv.) exposing the substrate to light of a wavelength of 250 to 500 nm, preferably 365 to 450 nm, more preferably 380 nm to 430 nm.

The invention further relates to a substrate coated by the composition obtainable by the method and the use of said coating composition as an anti-fogging coating for glass, glasses, safety glasses, a car windshield, a car pane, a window, a mirror, a visor, a camera lens, a microscope lens, a car headlight, a solar panel, a medical device such as an endoscope and a surgical instrument, a shower door, a bathroom tile, a greenhouse panel, and/or a face shield and as a primer for a water-based coating.

### BACKGROUND OF THE INVENTION

Fogging is a natural phenomenon that occurs when humid air meets a surface whose temperature is equal to or lower than the dew point.(1 ,2) This causes a large number of small droplets to form on the surface, severely impairing optical properties such as the light transmission of transparent materials due to irregular scattering of the incident light.(3-5) The consequences of surface fogging range from inconveniences such as reduced vision through glasses or on mirrors, to economic problems due to lower efficiency of solar cells or reduced crop yields when photosynthesis of plants is restricted under agricultural films, to safety-related effects such as impaired vision through helmet visors in road traffic or through medical glasses and with endoscopes during surgical procedures.(6-13) The formation of droplets on surfaces should also be prevented in coating processes such as spray coating of aqueous solutions in particular, so that the coating result is as uniform as possible.

A common strategy to prevent fogging involves changing the morphology of the forming water droplets by modifying the wetting properties of the surface, either through roughness or surface chemistry.(5) Strongly hydrophilic surfaces exhibit a reduction of the contact angle with water, whereby condensed water forms a quasi-continuous hydration layer on the coating, which reduces the scattering of incident light and yields high transparency.(13-16) By applying hydrophilic polymer coatings, the surface can be modified in this respect, although it should be noted that such coatings must be able to withstand humid environments without delamination in order to ensure long-term durability.(17) This is a problem often encountered with commercially available products that are based on physisorbed polymers.(17,18) Once the coating can no longer immobilize more water molecules, it can become unstable: weak surface bonding leads to interfacial failure, defects such as wrinkles and fractures can occur, resulting in uneven surfaces, which increases the refraction and scattering of light, leading to low transparency. In the worst case, without sufficient interfacial adhesion, the coating can peel off.(1 3,18-20) Alternative commercial products often contain per- and polyfluoroalkyl substances (PFAS), which are of concern for health and environmental reasons.(21-23)

The problem of delamination can be circumvented by covalent surface attachment, for example via polymer brushes introduced by surface-initiated (SI) polymerization under aqueous ambient conditions to produce durable superhydrophilic polymer coatings.(17,24,25) Polymer brushes have the inherent disadvantage to be surface attached by one single anchor point and interactions between individual polymer chains are usually purely physical through hydrogen bonding, van der Waals forces or ionic interactions and can be broken by solvent molecules, reducing the stability of the coating.(26,27) In addition, such systems are hardly practical for numerous applications such as the large-area coating of agricultural films.

As an alternative to brushes, polymer networks covalently attached to the surface are also well suited, with network formation based on C,H insertion crosslinking (CHic) proving to be a very elegant method.(28,29) This involves the preparation of statistical prepolymers by copolymerization of dormant crosslinkable units, which can then be applied to a wide variety of surfaces by conventional coating techniques.(30-32)

C,H-insertion crosslinking is selectively achieved by photochemical or thermal activation, even in the glassy state, where the reactive species formed, such as biradicals or carbenes, insert into the C-H bonds of neighboring polymer chains or those of the surface.(29,31-33) Thus, compared to conventional post-polymerization crosslinking approaches, the CHic reaction circumvents many problems, such as the need to introduce functional groups onto the surface, which often requires harsh conditions or synthetically complex steps, especially when chemically resistant and thus inert materials are to be functionalized.(33,34) In addition, no additives are required, and due to the universal crosslinking and abundant availability of C-H bonds, even small amounts of crosslinker are sufficient to form robust and durable networks.(32,33)

In general, caution should be exercised when crosslinking such polymer coatings at elevated temperatures or with high-energy light, otherwise the integrity of the substrate materials may be compromised, e.g. by deformation, degradation or discoloration, especially in the case of sensitive electronics such as those used in endoscopes.(35) Previous work has been published showcasing surface-attached anti-fogging coatings on the basis of C,H-insertion chemistry. Such approaches are for example disclosed in references 10, 13, 36 and documents US20190218327 and CN116285537A refering to polymers comprising moieties, which are photo-crosslinkable. Further EP2657293B1 and EP3960448A1 disclose coatings comprising polymers and in additon a photocrosslinker molecule. However, these approaches have in common that aryl azide groups, aceto phenone groups, aryl ketone groups such as benzophenone or a diazirine groups are used as photo crosslinkable moieties within the polymers or the photo crosslinker molecule, which have to be activated for a prolonged time in the UV range.(10,13,16,28,37) In addition, high energy doses are required for this, so that special irradiation and devices are necessary for successful cross-linking of these coatings, which means that cross-linking cannot simply be carried out by laypersons themselves.

Despite these technologies known in the prior art, there is the need for improved or alternative means for water-film-forming and anti-fogging coatings that can be applied to a surface by safe and simple means, that provide high stability of the coating on the surface and that can be easily renewed.

### SUMMARY OF THE INVENTION

In light of the prior art, the technical problem underlying the present invention is to provide improved and/or alternative means for water-film-forming and anti-fogging coatings of a surface that overcome the disadvantages of the prior art.

Another problem of the present invention is to provide improved and/or alternative means for providing a water-film-forming coating on a surface, that can be easily applied without the need for harmful substances such as harmful organic solvents.

Another problem underlying the present invention is to provide improved and/or alternative means for providing a water-film-forming coating on a surface, that can be easily renewed.

Another problem underlying the present invention is to provide improved and/or alternative means for producing a water-film-forming coating on a surface, that can be easily renewed without the need for removal of coating already present on the surface, cleaning of the surface or the use of specialized equipment.

Another problem underlying the present invention is to provide improved and/or alternative means for providing a water-film-forming coating on a surface that can be covalently immobilized to the surface and provide high stability of the coating on the surface.

Another problem underlying the invention is to provide improved and/or alternative means for providing a water-film-forming coating on a surface that can be easily and quickly applied without the need for specialized equipment or personnel.

Another problem underlying the invention is to provide improved and/or alternative means for providing a water-film-forming coating on a surface that can be applied and covalently immobilized to the surface without the need for high energy doses or long application time.

Another problem underlying the invention is to provide improved and/or alternative means for the synthesis of copolymers for use in water-film-forming coating compositions. Another problem underlying the present invention is to provide improved and/or alternative means for the synthesis of copolymers that allow the incorporation of highly hydrophilic structural units and into the copolymer and that can be covalently immobilized to the surface without the need for without the need for high energy doses or long application time.

These problems are solved by the features of the independent claims. Preferred embodiments of the present invention are provided in the dependent claims.

In one aspect the invention relates to a water-film forming **coating composition** comprising
a. a copolymer, wherein the copolymer comprises one or more structural units derived from a monomer comprising an ionic moiety (ionic monomer) and one or more structural units derived from a monomer comprising a diazo ester moiety (crosslinkable monomer), and
b. a solvent comprising water and/or an alcohol.

Fogged surfaces, such as bathroom mirrors or spectacle lenses, can quickly become a nuisance in everyday life, but are particularly problematic in safety-relevant and medical areas. Common approaches for anti-fogging coating of such surfaces are often based on coatings, which can prevent fogging, but are not very durable. To solve this problem, within the present invention a coating composition is provided comprising a photoreactive copolymer that forms a surface-attached polymer network on the surface of a substrate by photochemical activation using irradiation with ambient or other low-energy light at short irradiation times, thus advantageously allowing the quick and easy provision of a durable covalently attached coating on the surface of the substrate.

The photoreactive copolymer of the invention comprises ionic moieties and diazo ester moieties, preferably nitro substituted phenyl diazo ester moieties and optionally additional neutral, hydrophilic moieties. The diazo group of the copolymer is advantageously activated at low energy doses by light in the visible range, thereby forming carbenes, which bind to adjacent copolymer chains and simultaneously to the substrate surface by C,H insertion crosslinking (CHic). The resulting coated surfaces surprisingly exhibit excellent anti-fogging properties as they allow water to condense into a uniform thin film rather than droplet formation. Further, the copolymer coating on the surface of the substrate is advantageously highly transparent and remains stable and durable, even after frequent, strong washing. In addition, the compositions and copolymers of the invention can advantageously be easily applied to coatings already present on a surface, such as anti-fogging coatings damaged by soiling, thereby restoring the anti-fogging properties of the surface.

The ionic, hydrophilic copolymers of the compositions of the present invention comprising ionic moieties and hydrophilic diazo ester moieties can advantageously be dissolved in aqueous and/or alcoholic solvents without the of organic solvents for dissolution, that are highly hazardous to health or requiring specialized equipment. The copolymers and compositions of the invention can thus be easily applied and spread on the surface of a substrate by laypersons without the need for specialized equipment of safety means for example simply by using a cloth.

Besides the improved solubility in water, lower radiation doses are required for activation of the hydrophilic diazo ester crosslinkers, i.e. the amount of energy and duration of irradiation are required compared to the polymers and crosslinkers of the prior art. Further, cross-linking of the copolymers of the present invention can be obtained by exposure to sunlight or a light source generating light in the short-wave, visible light range within a few seconds. As demonstrated in the examples below the copolymers can advantageously directly be applied and processed as an aqueous or alcoholic solution, whereby diazo ester moiety can be activated by light of a wavelength above λ = 400 nm, allowing crosslinking by means of C,H insertion using visible light. As surprisingly very low energy doses are required to crosslink the copolymers of the present invention, after application of the coating composition a surface the copolymers can be crosslinked in just a few seconds, such as by exposing the coated surface to sunlight. As shown in the example below, for example at around 430 nm an irradiation for complete bonding of the layer of only 1.2 J/cm² is required. Coating and crosslinking can thus be carried out easily by non-professionals and without additional equipment, e.g., by manually applying the coating composition to a surface such as with a cloth or sponge and subsequently exposing the surface to sunlight without the need for an additional irradiation source, thereby forming a durable, surface attached anti-fogging coating on the surface.

In contrast, in the prior art in particular polymer systems with crosslinkers have been described, which are only reactive at wavelengths in the UV range and/or require high energy doses, such as polymers comprising benzophenone crosslinkers. Cross-linking of the copolymers of the invention is thus advantageously and surprisingly fast and effective and takes place within a short, practicable and user-friendly time frame. In addition, the copolymer networks formed by crosslinking on organic surfaces are surface-bound and therefore very abrasion-resistant and thus durable compared to commercially available coatings.

The copolymers and compositions of the present invention can further advantageously be reapplied to a surface, which may already be coated with an anti-fogging compositions such as the composition of the present invention, without the need for specialized equipment or personnel thereby improving and restoring the anti-fogging properties of the surface. Surprisingly, the surface does not have to be extremely clean or specially cleaned for this reapplication, as covalent crosslinking and covalent attachment of the compositions and copolymers of the present invention to the surface and the anti-fogging effect are not or only negligibly diminished by impurities and dirt being present on the surface to be coated. The compositions presented here are therefore surprisingly durable, user-friendly and environmentally friendly and can be applied to a wide range of different substrates with a surface comprising an organic material comprising C-H moieties.

Due to the high solubility of the copolymers of the composition in water and other aqueous or alcoholic solvents, the crosslinking in sunlight by simple means (i.e., direct application of the surface, activation by light in the visible range without the need for specialized equipment), the high durability of the coating and the possibility of damage repair (e.g., application to damaged coatings already present on the surface of substrate), the copolymers and compositions of the invention are particularly well suitable for easy-use scenarios by non-professionals.

In one embodiment the coating composition is in a liquid form.

In one embodiment the diazo ester moiety is a phenyl diazo ester moiety, preferably a nitro substituted phenyl diazo ester moiety.

In one embodiment the copolymer additionally comprises one or more structural units derived from a non-charged monomer (neutral monomer).

In one embodiment the copolymer has a degree of polymerization (DP) of 50 to 5000, preferably between 100 to 1000. In one embodiment the copolymer has a degree of polymerization (DP) of 50 to 5000, preferably between 100 to 1000, such as 50, 60, 70, 80, 90, 100, 150, 200, 250, 300, 350, 400, 450, 500, 550, 600, 650, 700, 750, 800, 850, 900, 950, 1000, 1500, 2000. 2500, 3000, 3500, 400, 4500 or 5000.

In one embodiment the structural units derived from the ionic monomer, the structural units derived from the crosslinkable monomer and optionally the structural units derived from neutral monomer are statistically distributed within the copolymer.

In one embodiment the copolymer comprises 0.1 to 20 mol% structural units derived from the crosslinkable monomer, preferably 0.5 to 7.5 mol% structural units, more preferably 1 to 5 mol% structural units. In one embodiment the copolymer comprises 0.1 to 20 mol% structural units derived from the crosslinkable monomer, such as 0.1, 0.2, 0.3, 0.4, 0.5, 0.6, 0.7, 0.8, 1.0, 1.5, 2.0, 2.5, 3.0, 3.5, 4.0, 4.5, 5.0, 5.5, 6.0, 6.5, 7.0, 7.5, 8.0, 8.5, 9.0, 9.5, 10.0, 11, 12, 13, 14, 15, 16, 17, 18, 19 or 20 mol%.

In one embodiment the copolymer comprises 60 to 95 mol% structural units derived from the ionic monomer, preferably 65 to 93 mol% structural units, more preferably 70 to 90 mol% structural units. In one embodiment the copolymer comprises 60 to 95 mol% structural units derived from the ionic monomer, such as 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94 or 95 mol%.

In one embodiment the copolymer comprises 10 to 35 mol% structural units derived from the neutral monomer, preferably 15 to 30 mol% structural units, more preferably 20 to 25 mol% structural units. In one embodiment the copolymer comprises 10 to 35 mol% structural units derived from the ionic monomer, such as 10,11, 12, 13, 14, 15, 16, 17, 18, 19, 20, 21,22, 23, 24, 25, 26, 27, 28, 39, 30, 31, 32, 33, 34 or 35 mol%.

In one embodiment the copolymer comprises
a. 60 to 95 mol% structural units derived from the ionic monomer, preferably 65 to 93 mol%, more preferably 70 to 90 mol%,
b. 0.1 to 20 mol% structural units derived from the crosslinkable monomer, preferably 0.5 to 7.5% structural units, more preferably 1 to 5% structural units, and
c. optionally 10 to 35 mol% structural units derived from the neutral monomer, more preferably 15 to 30 mol% structural units, more preferably 20 to 25 mol% structural units,

In one embodiment the copolymer comprises
a. 60 to 95 mol% structural units derived from the ionic monomer, preferably 65 to 93 mol%, more preferably 70 to 90 mol%, such as 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94 or 95 mol%,,
b. 0.1 to 20 mol% structural units derived from the crosslinkable monomer, preferably 0.5 to 7.5% structural units, more preferably 1 to 5% structural units, such as 0.1, 0.2, 0.3, 0.4, 0.5, 0.6, 0.7, 0.8, 1.0, 1.5, 2.0, 2.5, 3.0, 3.5, 4.0, 4.5, 5.0, 5.5, 6.0, 6.5, 7.0, 7.5, 8.0, 8.5, 9.0, 9.5, 10.0, 11, 12, 13, 14, 15, 16, 17, 18, 19 or 20 mol%, and
c. optionally 10 to 35 mol% structural units derived from the neutral monomer, more preferably 15 to 30 mol% structural units, more preferably 20 to 25 mol% structural units, such as 10, 11, 12, 13, 14, 15, 16, 17, 18, 19, 20, 21, 22, 23, 24, 25, 26, 27 ,28, 29, 30, 31, 32, 33, 34, or 35 mol%.

The presence of additional structural units derived from a neutral monomer within the copolymers of the present invention advantageously enhance the wetting and adherence of the coating composition on more hydrophobic surfaces, while maintaining the anti-fogging and water-film forming properties of the coating composition. In particular, when incorporated within the copolymer of the invention at an amount of 10 to 35 mol% structural units, preferably 15 to 30 mol% structural units, more preferably 20 to 25 mol% structural units, the wettability on hydrophobic surfaces is enhanced and the anti-fogging and water-film are fully retained.

In one embodiment the structural unit derived from the crosslinkable monomer forms a covalent bond with a C-H group by a C, H insertion reaction upon exposure to light of a wavelength of 250 to 500 nm., preferably 365 to 450 nm, more preferably 380 nm to 430 nm. In one embodiment the structural unit derived from the crosslinkable monomer forms a covalent bond with a C-H group by a C, H insertion reaction upon exposure to light of a wavelength of 250 to 500 nm, preferably 365 to 450 nm, more preferably 380 nm to 430 nm, such as 250, 260, 270, 280, 290, 300, 310, 320, 330, 340, 350, 360, 370, 380, 390, 400, 410, 420, 430, 440, 450, 460, 470, 480, 490 or 500 nm.

In one embodiment the structural unit derived from the crosslinkable monomer forms a covalent bond with a C-H group by a C, H insertion reaction upon exposure to sunlight. In one embodiment the structural unit derived from the crosslinkable monomer forms a covalent bond with a C-H group by a C, H insertion reaction upon exposure to sunlight comprising light of a wavelength of 250 to 500 nm, preferably 365 to 450 nm, more preferably 380 nm to 430 nm, such as 250, 260, 270, 280, 290, 300, 310, 320, 330, 340, 350, 360, 370, 380, 390, 400, 410, 420, 430, 440, 450, 460, 470, 480, 490 or 500 nm.

In one embodiment the diazo ester moiety forms a covalent bond with a C-H group by a C, H insertion reaction upon exposure to light of a wavelength of 250 to 500 nm, preferably 365 to 450 nm, more preferably 380 nm to 430 nm, such as 250, 260, 270, 280, 290, 300, 310, 320, 330, 340, 350, 360, 370, 380, 390, 400, 410, 420, 430, 440, 450, 460, 470, 480, 490 or 500 nm.

In one embodiment the diazo ester moiety forms a covalent bond with a C-H group by a C, H insertion reaction upon exposure to sunlight. In one embodiment the diazo ester moiety forms a covalent bond with a C-H group by a C, H insertion reaction upon exposure to sunlight comprising light of a wavelength of 250 to 500 nm, preferably 365 to 450 nm, more preferably 380 nm to 430 nm, such as 250, 260, 270, 280, 290, 300, 310, 320, 330, 340, 350, 360, 370, 380, 390, 400, 410, 420, 430, 440, 450, 460, 470, 480, 490 or 500 nm.

In one embodiment the crosslinkable monomer additionally comprises a hydrophilic linker.

In one embodiment the copolymer comprises a methacrylate backbone or an acrylate backbone.

In one embodiment the crosslinkable monomer comprises a diazo-ester moiety, a methacrylate or acrylate moiety and a hydrophilic linker separating the diazo-ester and the methacrylate or acrylate moiety. In one embodiment the crosslinkable monomer comprises a diazo-ester moiety and a hydrophilic linker, wherein the hydrophilic linker covalently binds the diazo ester moiety to the backbone of the copolymer. In one embodiment the copolymer comprises a methacrylate backbone or an acrylate backbone and the structural unit derived from the crosslinkable monomer comprises a diazo-ester moiety and a hydrophilic linker, wherein the hydrophilic linker covalently binds the diazo ester moiety to the backbone of the copolymer.

In one embodiment the crosslinkable monomer comprises a phenyl diazo-ester moiety, a methacrylate or acrylate moiety and a hydrophilic linker separating the phenyl diazo-ester and the methacrylate or acrylate moiety. In one embodiment the crosslinkable monomer comprises a phenyl diazo-ester moiety and a hydrophilic linker wherein the hydrophilic linker covalently binds the phenyl diazo-ester moiety to the backbone of the copolymer. In one embodiment the copolymer comprises a methacrylate backbone or an acrylate backbone and the structural unit derived from the crosslinkable monomer comprises a phenyl diazo-ester moiety and a hydrophilic linker, wherein the hydrophilic linker covalently binds the phenyl diazo ester moiety to the backbone of the copolymer.

In one embodiment the crosslinkable monomer comprises a nitro-substituted phenyl diazo-ester moiety, a methacrylate or acrylate moiety and a hydrophilic linker separating the nitro-substituted diazo-ester and the methacrylate or acrylate moiety. In one embodiment the crosslinkable monomer comprises a nitro-substituted phenyl diazo-ester moiety and a hydrophilic linker wherein the hydrophilic linker covalently binds the nitro-substituted phenyl diazo-ester moiety to the backbone of the copolymer. In one embodiment the copolymer comprises a methacrylate backbone or an acrylate backbone and the structural unit derived from the crosslinkable monomer comprises a nitro-substituted diazo-ester moiety and a hydrophilic linker, wherein the hydrophilic linker covalently binds the nitro-substituted diazo ester moiety to the backbone of the copolymer.

In one embodiment the crosslinkable monomer comprises a nitro-substituted phenyl diazo-ester moiety, a methacrylate or acrylate moiety and a hydrophilic linker separating the nitro-substituted phenyl diazo-ester and the methacrylate or acrylate moiety. In one embodiment the copolymer comprises a methacrylate backbone or an acrylate backbone and the structural unit derived from the crosslinkable monomer comprises a nitro-substituted phenyl diazo-ester moiety and a hydrophilic linker, wherein the hydrophilic linker covalently binds the nitro-substituted phenyl diazo ester moiety to the backbone of the copolymer.

In one embodiment the hydrophilic linker is a linear polyethylene glycol (PEG).

In one embodiment the hydrophilic linker is a linear polyethylene glycol (PEG) having a degree of polymerization (DP) of 1 to 10, preferably 2 to 8, more preferably 3 to 6, such as 1, 2, 3, 4, 5, 6, 7, 8, 9, or 10.

In one embodiment the hydrophilic linker is tetraethylene glycol (TEG).

In the context of the present invention the terms "spacer" and "linker" are used interchangeably.

Due to the hydrophilic linker, such as TEG, the crosslinkable monomer can advantageously be easily polymerized with highly hydrophilic ionic monomers such as SPMK and METAS, which are substantially only soluble in highly polar solvents. Such highly hydrophilic monomers are particularly difficult to polymerize with hydrophobic benzophenone-based crosslinkable monomers known in the prior art.

In contrast, the crosslinkable monomer of the present invention can be easily polymerized with such highly hydrophilic ionic monomers at low temperatures in less or even non-hazardous polar solvents such as alcohol or alcohol/water mixtures resulting in a simple non-hazardous polymerization and production of the copolymer.

The crosslinkable monomer according to the present invention comprising a hydrophilic linker thus advantageously allows highly hydrophilic monomers such as SPMK and METAS to be utilized for the synthesis of copolymers for anti-fogging coatings. The incorporation of highly hydrophilic ionic monomers into such copolymers for anti-fogging coatings advantageously leads to highly hydrophilic coatings and thus particularly good anti-fogging properties.

The compositions of the present invention thus advantageously provide a highly hydrophilic coating, which can be covalently bound to the surface by simple means at surprisingly low energy doses in just a few seconds, such as by exposing the coated surface to sunlight.

Further, the hydrophilic spacer further enhances hydrophilicity of the cross linkable monomer and copolymer comprising a structural unit derived from the crosslinkable monomer and thus the solubility of the copolymer in aqueous and/or alcoholic solvents, thereby further improving simple and straightforward applicability of the coating composition of the invention without the need for specialized equipment and safety means.

In one embodiment the crosslinkable monomer comprises a nitro-substituted diazo-ester moiety, a methacrylate or acrylate moiety and a hydrophilic linker covalently linking the nitro-substituted diazo-ester and the methacrylate or an acrylate moiety, wherein the crosslinkable monomer is preferably selected from the group consisting of 2-(2-Diazo-2-(4-nitrophenyl)acetoxy)ethyl methacrylate (PEDAz-4NO₂) and 14-Diazo-14-(4-nitrophenyl)-13-oxo-tetraethylenglycol methacrylate (TEGPEDAz-4NO₂).

In one embodiment the crosslinkable monomer is selected from the group consisting of 2-(2-Diazo-2-(4-nitrophenyl)acetoxy)ethyl methacrylate (PEDAz-4NO₂) and 14-Diazo-14-(4-nitrophenyl)-13-oxo-tetraethylenglycol methacrylate (TEGPEDAz-4NO₂). In one embodiment the structural unit derived from the crosslinkable monomer is selected from the group consisting of 2-(2-Diazo-2-(4-nitrophenyl)acetoxy)ethyl methacrylate (PEDAz-4NOz) and 14-Diazo-14-(4-nitrophenyl)-13-oxo-tetraethylenglycol methacrylate (TEGPEDAz-4NOz).

In one embodiment the ionic monomer is selected from the group consisting of 3-sulfopropylmethacrylate (SPMK), [2-(methacryloyloxy)-ethyl]trimethylammonium.methylsulfate (METAS), 2-(Methacryloyloxy)ethyltrimethylammonium chloride (METAC), N-[2-(Methacryloyloxy)ethyl]-N,N-dimethylbutan-1-aminium Bis(trifluoromethanesulfonyl)imide, 3-Sulfopropyl Acrylate Potassium Salt, N-(2-Acryloyloxyethyl)-N-benzyl-N,N-dimethylammonium Chloride and Methacrylamido propyl trimethyl ammonium chloride.

In one embodiment the structural unit derived from the ionic monomer is selected from the group consisting of 3-sulfopropylmethacrylate (SPMK), [2-(methacryloyloxy)-ethyl]trimethylammonium.methylsulfate (METAS), 2-(Methacryloyloxy)ethyltrimethylammonium chloride (METAC), N-[2-(Methacryloyloxy)ethyl]-N,N-dimethylbutan-1-aminium Bis(trifluoromethanesulfonyl)imide, 3-Sulfopropyl Acrylate Potassium Salt, N-(2-Acryloyloxyethyl)-N-benzyl-N,N-dimethylammonium Chloride and Methacrylamido propyl trimethyl ammonium chloride.

In one embodiment the neutral monomer is selected from the group consisting of N,N-dimethylacrylamide (DMAA),hydroxyethylmethacrylate (HEMA), 2-(dimethylamino)ethyl acrylate, 2-hydroxyethyl acrylate, N-lsopropylacrylamide and 2-(2-(2-methoxyethoxy)ethoxy)ethyl methacrylate.

In one embodiment the structural unit derived from the neutral monomer is selected from the group consisting of N,N-dimethylacrylamide (DMAA),hydroxyethylmethacrylate (HEMA), 2-(dimethylamino)ethyl acrylate, 2-hydroxyethyl acrylate, N-Isopropylacrylamide and 2-(2-(2-methoxyethoxy)ethoxy)ethyl methacrylate.

In one aspect the invention relates to a crosslinkable monomer comprising a diazo ester moiety, a hydrophilic linker and a polymerizable moiety, wherein the polymerizable moiety is selected from the group consisting of an acrylate and a methacrylate.

In one embodiment the diazo ester moiety is a phenyl diazo ester moiety. In one embodiment the diazo ester moiety is a nitro-substituted phenyl diazo ester moiety.

In one embodiment the hydrophilic linker is a linear polyethylene glycol (PEG).

In one embodiment the hydrophilic linker is a linear polyethylene glycol (PEG) having a degree of polymerization (DP) of 1 to 10, preferably 2 to 8, more preferably 3 to 6, such as 1, 2, 3, 4, 5, 6, 7, 8, 9, or 10.

In one embodiment the hydrophilic linker is tetraethylene glycol (TEG).

In one embodiment the hydrophilic linker covalently binds the diazo-ester moiety to the polymerizable moiety. In one embodiment the diazo-ester moiety is covalently bound to the hydrophilic linker and the hydrophilic linker is covalently bound to the polymerizable moiety.

In one embodiment the hydrophilic linker covalently binds the phenyl diazo-ester moiety to the polymerizable moiety. In one embodiment the phenyl diazo-ester moiety is covalently bound to the hydrophilic linker and the hydrophilic linker is covalently bound to the polymerizable moiety.

In one embodiment the hydrophilic linker covalently binds the nitro-substituted phenyl diazo-ester moiety to the polymerizable moiety. In one embodiment the nitro-substituted phenyl diazo-ester moiety is covalently bound to the hydrophilic linker and the hydrophilic linker is covalently bound to the polymerizable moiety.

In one embodiment the crosslinkable monomer is selected from the group consisting of 2-(2-Diazo-2-(4-nitrophenyl)acetoxy)ethyl methacrylate (PEDAz-4NO₂) and 14-Diazo-14-(4-nitrophenyl)-13-oxo-tetraethylenglycol methacrylate (TEGPEDAz-4NO₂). In one embodiment the crosslinkable monomer is 14-Diazo-14-(4-nitrophenyl)-13-oxo-tetraethylenglycol methacrylate (TEGPEDAz-4NOz).

As stated above the crosslinkable monomer is soluble in polar solvents and can thus advantageously be easily polymerized with highly hydrophilic ionic monomers such as SPMK and METAS, which are substantially only soluble in highly polar solvents. The crosslinkable monomer thus advantageously allows such highly hydrophilic monomers to be utilized for the synthesis of copolymers for anti-fogging coating compositions resulting in highly hydrophilic coatings with improved anti-fogging properties. The crosslinkable monomer of the present invention thus allows the synthesis and provision of copolymers for anti-fogging coatings, which can be covalently bound to a surface at surprisingly low energy doses in just a few seconds by using simple means. The present invention is thus based on an unexpected and beneficial finding, as to the best knowledge of the inventors no such crosslinkable monomers have been previously described.

In one aspect the invention relates to a **method** for depositing a water-film forming coating to a substrate, the method comprising
i. provision of a substrate,
ii. provision of a composition according to the invention,
iii. application of the composition to the surface of the substrate, and
iv. exposing the substrate to light of a wavelength of 250 to 500 nm, preferably 365 to 450 nm, more preferably 380 nm to 430 nm,
wherein by exposure to light the diazo ester moiety of the copolymer comprised in the composition is photochemically activated, a C,H-insertion reaction is initiated and a covalent surface attached polymer network is formed.

In one aspect the invention relates to a **method** for depositing a water-film forming coating to a substrate, the method comprising
i. provision of a substrate,
ii. provision of a composition according to the invention,
iii. application of the composition on the surface of the substrate, and

exposing the substrate to light of a wavelength of 250 to 500 nm, preferably 365 to 450 nm, more preferably 380 nm to 430 nm, such as 250, 260, 270, 280, 290, 300, 310, 320, 330, 340, 350, 360, 370, 380, 390, 400, 410, 420, 430, 440, 450, 460, 470, 480, 490 or 500 nm,
wherein by exposure to light the diazo ester moiety of the copolymer comprised in the composition is photochemically activated, a C,H-insertion reaction is initiated and a covalent surface attached polymer network is formed.

In one embodiment by exposure to light the diazo ester moiety of the copolymer comprised in the composition is photochemically activated, a C,H-insertion reaction is initiated and a copolymer network covalently attached to the surface is formed.

In one aspect the invention relates to a **method** for depositing a water-film forming coating to a surface of a substrate, the method comprising
i. provision of a substrate,
ii. provision of a composition according to the invention,
iii. application of the composition to the surface of the substrate, and
exposing the substrate to light of a wavelength of 250 to 500 nm, preferably 365 to 450 nm, more preferably 380 nm to 430 nm, such as 250, 260, 270, 280, 290, 300, 310, 320, 330, 340, 350, 360, 370, 380, 390, 400, 410, 420, 430, 440, 450, 460, 470, 480, 490 or 500 nm.

In one embodiment by exposure to light the diazo ester moiety of the copolymer comprised in the composition is photochemically activated, a C,H-insertion reaction is initiated and a copolymer network covalently attached to the surface is formed.

In one embodiment the substrate comprises an organic surface comprising C-H moieties, wherein the organic surface is preferably selected from glass, a silanized surface such as silanized glass and silanized metal, and plastics, wherein the plastics is preferably selected from the group consisting of polymethylmethacrylate (PMMA), polycarbonate (PC), polyethylene (PE), polypropylene (PP) and copolymers thereof.

In one embodiment the composition is applied to the surface of the substrate by spray coating, dip coating, rotational coating, doctor blading, drop coating and/or manually.

In one embodiment the composition is applied to the surface of the substrate by spray coating, dip coating, rotational coating, doctor blading, drop coating and/or applied with a cloth.

In one embodiment the composition is applied to the surface of the substrate manually by using a cloth, brush, sponge and/or roller.

In one aspect the invention relates to a substrate coated by the composition according to the invention obtainable by the method according to the invention, wherein the copolymer comprised in the composition is covalently attached to the surface of the substrate.

In one aspect the invention relates to a substrate coated by the composition according to the invention obtainable by the method according to the invention, wherein the copolymer comprised in the composition is covalently bound to the surface of the substrate.

In one embodiment the surface of the substrate has a water contact angle of equal or less than 30°, preferably equal or less than 25°, more preferably equal or less than 20°. In one embodiment the surface of the substrate has a water contact angle of equal or less than 30°, preferably equal or less than 25°, more preferably equal or less than 20°, such as 30, 29, 28, 27, 26, 25m 24, 23,22,21, 20, 19, 18, 17, 16, 15, 14, 13, 12, 11, 10, 9, 8, 7, 6, 5, 4, 3, 2, 1 or 0°.

In one embodiment the surface of the substrate coated by the composition of the invention has a water contact angle of equal or less than 30°, preferably equal or less than 25°, more preferably equal or less than 20°, such as 30, 29, 28, 27, 26, 25m 24, 23,22,21, 20, 19, 18, 17, 16, 15, 14, 13, 12, 11, 10, 9, 8, 7, 6, 5, 4, 3, 2, 1 or 0°.

In one embodiment the substrate is selected from glass, glasses, safety glasses, a car windshield, a car pane, a window, a mirror, a visor, a camera lens, a microscope lens, a car headlight, a solar panel, a medical device such as an endoscope and a surgical instrument, a shower door, a bathroom tile, a greenhouse panel, and/or a face shield.

In one aspect the invention relates to the use of a coating composition according to the invention as an anti-fogging coating for glasses, safety glasses, car windshields, car panes, windows, mirrors, visors and/or camera lenses.

In one aspect the invention relates to the use of a coating composition according to the invention as an anti-fogging coating for glass, glasses, safety glasses, a car windshield, a car pane, a window, a mirror, a visor, a camera lens, a microscope lens, a car headlight, a solar panel, a medical device such as an endoscope and a surgical instrument, a shower door, a bathroom tile, a greenhouse panel, and/or a face shield.

In one embodiment the invention relates to the use of the composition as a primer for a water-based coating.

In one embodiment the invention relates to the use of the composition as a primer for a water-based paint.

All features described in the present specification may be employed to define any other embodiment or aspect of the invention. For example, features used to describe the coating composition or the copolymer comprised in the composition may be used to describe the method for depositing the coating, the substrate coated by the composition, the use of the composition, the use of the coated substrate and vice versa.

### DETAILED DESCRIPTION

The invention relates broadly to a water-film forming coating composition comprising a copolymer comprising structural units derived from an ionic monomer and structural units derived from a crosslinkable monomer comprising a diazo ester and an aqueous or alcoholic solvent. The invention further relates to a crosslinkable monomer comprising a diazo ester moiety, a hydrophilic linker and a polymerizable moiety. The invention further relates to a method for applying an anti-fogging coating to the surface of a substrate by using the composition of the invention and a substrate coated by the composition and method of the present invention.

All words and terms used herein shall have the same meaning commonly given to them by the person skilled in the art unless the context indicates a different meaning. All terms used in the singular shall include the plural of that term and vice versa.

### General terms:

As used herein, the terms "comprising" and "including", or grammatical variants thereof are to be taken as specifying the stated features, integers, steps or components but do not preclude the addition of one or more additional features, integers, steps, components or groups thereof. This term encompasses the terms "consisting of" and "consisting essentially of".

Thus, the terms "comprising"/"including"/"having" mean that any further component (or likewise features, integers, steps and the like) can/may be present. The term "consisting of" means that no further component (or likewise features, integers, steps and the like) is present.

The term "consisting essentially of" or grammatical variants thereof when used herein are to be taken as specifying the stated features, integers, steps or components but do not preclude the addition of one or more additional features, integers, steps, components or groups thereof but only if the additional features, integers, steps, components or groups thereof do not materially alter the basic and novel characteristics of the claimed composition, device or method.

Thus, the term "consisting essentially of" means those specific further components (or likewise features, integers, steps and the like) can be present, namely those not materially affecting the essential characteristics of the composition, device or method. In other words, the term "consisting essentially of" (which can be interchangeably used herein with the term "comprising substantially"), allows the presence of other components in the composition, device or method in addition to the mandatory components (or likewise features, integers, steps and the like), provided that the essential characteristics of the device or method are not materially affected by the presence of other components.

The term "method" refers to manners, means, techniques and procedures for accomplishing a given task including, but not limited to, those manners, means, techniques and procedures either known to, or readily developed from known manners, means, techniques and procedures by practitioners of the chemical, biological and biophysical arts.

### Crosslinking and C,H-insertion reaction:

The term "crosslinking" refers to the formation of covalent bonds between two or more molecules, resulting in a three-dimensional network structure. Crosslinking and in particular the degree of crosslinking alters the structural, chemical, mechanical and physical properties of the molecules and the network or composite formed. For example, a network formed may have a particular mesh size or pore size. Further, the crosslinked copolymer network may without limitation have an altered swellability, hydrophilicity hydrophobicity, mechanical strength, translucency, chemical resistance to specific chemical agents such as acids, oxidative agents and/or bases and/or flexibility compared to a non-crosslinked molecule.

The "degree of crosslinking" in the context of the present invention refers to the extent to which the molecules of a network such as copolymer chains are interconnected through covalent crosslinking bonds. The degree of crosslinking quantifies the density or concentration of such bonds (crosslinks) within network. A higher degree of crosslinking indicates a greater number of crosslinks per unit volume or weight of the overall network. A person skilled in the art is aware of methods for determining the degree of crosslinking of a copolymer network. Such methods may include measurement of the degree of crosslinking by swelling tests. The crosslinked sample such as the network is placed into a good solvent at a specific temperature, and either the change in mass or the change in volume is measured. The higher the number of crosslinks, the less swelling is attainable. Based on the degree of swelling, the Flory Interaction Parameter (which relates the solvent interaction with the sample), and the density of the solvent, the theoretical degree of crosslinking can be calculated according to Flory's Network Theory.

The term "crosslinkable group" also termed "crosslinkable functional group" or "crosslinking group" according to the present invention refers to a functional group of a chemical compound or molecule such as a monomer or the copolymer comprised in the composition of the present invention, which may form a covalent bond with another molecule or with the molecule it is comprised in, thereby forming a covalent network. In one embodiment a crosslinkable group according to the present invention forms a covalent bond upon activation, preferably light activation. In one embodiment a crosslinkable group according to the present invention forms a covalent bond with another molecule such as with the surface of a substrate or within the molecule it is comprised in by a C,H insertion reaction upon light stimulation. Such crosslinkable group that forms a covalent bond with another molecule or within the molecule it is comprised in by a C,H insertion reaction upon external stimulation is termed "C,H insertion group". Examples of such "crosslinkable groups" by a C,H insertion reaction include without limitation an aromatic ketone such as benzophenone and anthraquinone, an azide such as sulfonyl azide and a diazo ester group. In embodiments the crosslinkable group is a diazo ester group, preferably a phenyl diazo ester group, more preferably a nitro-substituted phenyl diazo ester group.

The term "crosslinkable monomer" according to the present invention refers to a monomer that comprises a diazo ester moiety such as a phenyl diazo ester moiety, preferably a nitro-substituted diazo ester moiety, more preferably a nitro-substituted phenyl diazo ester moiety. The term "nitro-substituted diazo ester moiety" of refers to a diazo ester moiety comprising a nitro group such as a phenyl diazo ester moiety comprising a nitro group covalently attached to phenyl. In embodiments the crosslinkable monomer is selected from the group consisting of 2-(2-Diazo-2-(4-nitrophenyl)acetoxy)ethyl methacrylate (PEDAz-4NO₂) and 14-Diazo-14-(4-nitrophenyl)-13-oxo-tetraethylenglycol methacrylate (TEGPEDAz-4NO₂).

The term C,H insertion reaction, also known as a carbon-hydrogen insertion reaction, refers to a chemical reaction in which a carbon atom (C) of a reagent such as of the diazo ester group of the copolymer comprised in the composition of the present invention is inserted into a carbon-hydrogen (C-H) bond of a molecule such as of a surface, thereby breaking the C-H bond and forming a new carbon-carbon (C-C) bond between the reagent and the organic molecule, e.g. the surface. This type of reaction advantageously allows for the direct functionalization of C-H bonds, which are typically considered inert and challenging to activate and is applicable to a wide range of organic compounds comprising C-H bonds. Examples for the synthesis of molecules by C,H insertion reaction are disclosed in Straub et al. ("CHicable" and "Clickable" Copolymers for Network Formation and Surface Modification", Langmuir 2021), Kost et al., ("Thermally Induced Cross-Linking of Polymers via C,H Insertion Cross-Linking (CHic) under Mild Conditions" J. Am. Chem. Soc. 2021) and Jung et al. ("Facile, scalable, and universal modification strategy of polyolefin utilizing noncatalytic C-H insertion capability of azide: Sulfonyl azide end-functionalized polystyrene to modify polyethylene", European Polymer Journal 2021).

C,H insertion reactions typically require reagents that possess specific functional groups capable of facilitating the insertion of a carbon atom into a C-H bond upon activation such as by external stimuli, for example thermal, light or mechanical stimuli. Functional groups that form a covalent bond by a C,H insertion reaction upon external stimulation include without limitation a diazo ester group (-C=N=N), an azide such as azide (-N₃) a sulfonyl azide (-SO₂N₃), an aromatic ketone such as benzophenone and anthraquinone and an iodonium ylide, preferably a diazo ester group.

A diazo ester group can for example be activated for a C,H insertion reaction by external light stimulation. Activation by a light stimulus, also termed photochemical activation comprises irradiation or exposure of the diazo group to light of a specific wavelength or a range of wavelengths, preferably irradiation or exposure to light. Photochemical activation of a diazo group results in decomposition of the diazo group and formation a carbene group reacting with the C-H group of a molecule such as a molecule of the surface the composition is applied to.

The term "external activation" or "external stimulation" refers to the application of external conditions providing an energy source for a chemical reaction and optionally the addition a catalyst to a chemical compound or a mixture of chemical compounds to induce chemical reactions such as the formation of a covalent bond by the crosslinkable group of the copolymer comprised in the composition of the present invention with a molecule of a surface of a substrate. In the context of C,H insertion reactions, external stimulation involves without limitation applying external stimuli such as light (photochemical), heat (thermal), mechanical force (mechanochemical) and/or electric fields to generate highly reactive intermediates that can insert into C-H bonds of molecules thereby forming a covalent bond. In embodiment external stimulation comprises exposure of the composition of the invention or a substrate coated therewith to a light source.

"Light stimulation" also termed "light activation", or "photochemical activation" refers to the process of using light energy, typically ultraviolet (UV) or visible light, to induce chemical reactions by exciting the molecules involved. In the context of C,H insertion reactions, photochemical activation involves using the irradiation or exposure to light to generate highly reactive intermediates such as carbenes or nitrenes, which can then insert into C-H bonds of molecules, such as polymers. Methods and means for photochemical activation such as light sources used for exposure to light are well known to a person skilled in the art. In one embodiment light stimulation comprises exposure of the composition of the invention or a substrate coated therewith to a light source, preferably a light with a wavelength of 250 to 500 nm. In embodiment light stimulation comprises exposure of the composition of the invention or a substrate coated therewith to sunlight, preferably sunlight comprising light of a wavelength of 250 to 500 nm.

In the context of the present invention sunlight may be employed as light source for photochemical activation to induce C,H insertion reactions. Sunlight refers to the full spectrum of electromagnetic radiation emitted by the sun, encompassing various wavelengths, including, but not limited to light within the ultraviolet (UV) wavelength region (100 to 380 nm), the visible light wavelength region (380 to 780 nm), and the infrared (IR) wavelength region (780 nm to 1 mm).

### Monomers, copolymers and compositions:

The term "polymer" refers to a molecule comprising at least two identical or similar substructures (also termed "subunits") linked to each other, preferably by a covalent bond. A substructure or subunit of an oligomer is termed monomer.

Polymers are usually synthesized by an polymerization reaction, wherein numerous monomers are linked together covalently. The type of synthesis method depends on the type monomers to be covalently linked to each other. Polymerization methods can be classified into chain-growth polymerization including without limitation free-radical polymerization, anionic polymerization, cationic polymerization, coordination polymerization, and step-growth polymerization including without limitation polycondensation, polyaddition and ring-opening polymerization. These methods are well known in the art and a person skilled in the art is capable of choosing a suitable method for synthesizing a polymer.

The "polymer backbone" is the primary, continuous chain of atoms that forms the central framework of a polymer. This backbone is composed of the repeating units derived from the monomers, linked together by covalent bonds. The backbone can be linear or branched, and can contain various types of atoms, such as carbon, nitrogen, oxygen, or silicon, depending on the specific monomers used in the polymerization process. Modifications to the backbone, such as the inclusion of side chains or functional groups, can further tailor the properties of the oligomer or polymer for specific applications. In embodiments the polymer backbone is a methacrylate or acrylate. A "side chain", also termed "pendant group", is a functional group or substituent covalently attached to the oligomer or polymer backbone. A side chain is not part of the primary continuous chain of atoms that forms the backbone of the polymer.

The term "structural unit derived from a monomer" in the context of the present invention refers to a chemical structure within the copolymer of the invention that originates from a specific monomer polymerized during synthesis of the copolymer, such as from an ionic monomer, a crosslinkable monomer or a neutral monomer according to the invention. In embodiments the "structural unit derived from a monomer" particularly refers to the portion of the monomer that does not form a covalent bound to one or more other monomers during polymerization. In embodiments the "structural unit derived from a monomer" thus refers to the part of the monomer that is not the "polymerizable moiety". In embodiments the "structural unit derived from a monomer" refers to the portion of the monomer that does not form the polymer backbone of the copolymer. In embodiments the "structural unit derived from a monomer" refers to the portion of the monomer that forms a side chain of the copolymer. In embodiments the "structural unit derived from a monomer" refers to the portion of the monomer that does not undergo chemical reaction upon polymerization and/or remains chemically unchanged upon polymerization.

The term "polymerizable moiety" or "polymerizable group" refers to a moiety within a monomer that undergoes a chemical reaction within a polymerization reaction to form covalent bonds with other monomers, thus forming a polymer. Examples of polymerizable groups include functional groups comprising vinyl groups, epoxide groups and carboxyl groups. In one embodiment the polymerizable group is selected from the group consisting of an acrylate or methacrylate. Acrylates are esters or salts of acrylic acid. The general structure of an acrylate monomer is CH₂=CHCOOR, wherein R is the part of the monomer forming the side chain of a polymer derived from said monomer. Methacrylates are esters or salts of methacrylic acid. The general structure of a methacrylate monomer is CH₂=C(CH₃)COOR, wherein R is the part of the monomer forming the side chain of a polymer derived from said monomer.

The degree of polymerization (DP) of a polymer refers to the number of subunits comprised in a polymer. The DP is a critical parameter that determines the molecular weight and, consequently, the physical and mechanical properties of the polymer. A higher DP usually correlates with a greater tensile strength, durability, and thermal stability of the polymer. The DP can for example be determined by size exclusion chromatography (SEC), nuclear magnetic resonance spectroscopy (NMR), osmometry, viscometry and mass spectrometry.

Size Exclusion Chromatography (SEC), is a technique used to determine the molecular weight distribution of polymers. By comparing the elution volume of the polymer with that of known standards, the average molecular weight and the DP can be calculated. NMR spectroscopy can provide detailed information about the chemical structure of the polymer. By analyzing the end groups of the polymer chain, it is possible to determine the DP. This method is especially useful for polymers with well-defined end groups. Osmometry measures the osmotic pressure of a polymer solution to determine the number average molecular weight (Mn). From Mn and the known molecular weight of the repeating unit, the DP can be calculated. Viscometry measures the viscosity of a polymer solution. The intrinsic viscosity of the solution is related to the molecular weight of the polymer. Using Mark-Houwink parameters, the molecular weight, and hence the DP, can be estimated. Mass spectrometry can be used to determine the molecular weight of polymers. Techniques such as MALDI-TOF (Matrix-Assisted Laser Desorption/lonization Time-of-Flight) allow for the precise determination of the molecular weight distribution and the calculation of the DP. These methods are well known in the prior art and a person skilled in the art is capable of determining the DP of a polymer without undue burden by using these methods.

The term "homopolymer" refers to a polymer consisting of one monomer repeated throughout the polymer. A homopolymer consists of identical structural subunits originating from the same monomer. The term "copolymer" refers to a polymer comprising at least two different monomers covalently linked to each other.

Within a copolymer the monomers may be "randomly" or "statistically "distributed, termed "statistical copolymers", distributed in an alternating pattern, termed "alternating copolymer", distributed as a gradient, termed "gradient copolymer", or as 2 or more blocks, such as 2, 3, 4, 5, 6, 7, 8, 9, or 10 blocks, each comprising a single type of monomer, termed "block copolymer".

Polymers can further be broadly classified into two natural and synthetic polymers. Natural polymers are of natural origin such as from plants, microorganisms, and animals. They include without limitation carbohydrates and proteins. Examples for natural polymers include without limitation cellulose, lignin, alginate, collagen, gelatin, silk fibroin, starch, hyaluronic acid, chitosan. Synthetic polymers are chemically synthesized or modified polymers that are artificially created by chemical synthesis or chemical modification of a natural polymers, such as by incorporation of an additional functional group. Examples for synthetic polymers include without limitation polyethylene (PE), polypropylene (PP), polystyrene (PS), polyvinyl chloride (PVC), polytetrafluoroethylene (PFTE), polycarbonate (PC), acrylnitrile butadiene styrene (ABS), polycaprolactone (PCL), poly (lactic-co-glycolic acid) (PLGA), polyetheretherketone (PEEK), polyhydroxyalkanoate (PHA) and polyethylene glycol) (PEG).

A "covalent bond" is a chemical bond in which electrons are shared between atoms to form electron pairs between atoms; Within a covalent bond two atoms share one or more pairs of electrons in order to achieve a more stable electron configuration, often resulting in each atom attaining a complete outer electron shell. Covalent bonds can form between atoms of the same element or atoms of different elements. A covalent bond may be a single, a double or a triple covalent bond.

The term functional group" or "moiety" refers to specific arrangements of atoms within molecules that impart characteristic chemical properties to those molecules. These groups can undergo predictable reactions regardless of the surrounding molecular structure. Functional groups also play a crucial role in determining the solubility, reactivity, and other chemical and biological properties of organic molecules. In the context of the present invention the term "moiety" refers to a distinct part or portion of a molecule such as a functional group of a molecule. For example, the term "nitro-substituted phenyl diazo ester moiety" refers to a nitro-substituted phenyl diazo ester group within a molecule.

The term "hydrophilic" refers to the property of a substance such as a monomer or a polymer to attract, absorb, or interact with water. Hydrophilic monomers and polymers exhibit a high affinity for water and can be wetted or dissolved by water. This property is typically achieved through the presence of polar or ionic functional groups within the polymer, such as hydroxyl, carboxyl, amino, or sulfate groups. According to the IUPAC (International Union of Pure and Applied Chemistry) definition, hydrophobicity is the capacity of a molecular entity or of a substituent to interact with polar solvents, in particular with water, or with other polar groups.

The term "hydrophobic" refers to the property of a substance or functional group to exhibit reduced interaction with water, e.g. reduced or no solubility in water or reduced or no wettability by water. According to the IUPAC (International Union of Pure and Applied Chemistry) definition, hydrophobicity is the association of non-polar groups or molecules in an aqueous environment due to the tendency of water to exclude non-polar groups or molecules. Functional groups that tend to make substances hydrophobic include alkyl, aryl and heterocyclic and heteroaryl groups, such as straight-chain or branched hydrocarbons and aromatic ring systems.

Hydrophilicity and hydrophobicity and thus the wettability of a surface can be determined by measuring the water contact angle. The water contact angle is the angle formed by the surface of a drop of liquid with the surface of a solid. According to the present invention, the wetted solid surface is described as hydrophilic ("water-loving") at contact angles below 50°, as hydrophobic ("water-repellent") at contact angles above 50° and as superhydrophobic at contact angles above 150°. The methods for measuring the contact angle are state of the art and known to the skilled person.

The term "ionic monomer" or "monomer with an ionic moiety" refers to a monomer that comprises ionic moieties. The ionic moieties can be positively charged (cationic), negatively charged (anionic), or amphoteric (comprising positively charged and negatively charged moieties). The term "structural unit derived from an ionic monomer" refers to the portion of the ionic monomer that does not form a covalent bound to one or more other monomer during polymerization. In embodiments the structural unit derived from an ionic monomer comprises an ionic moiety. Positively charged moieties (cationic moieties) include without limitation ammonium, dimethylammonium, trimethylammonium, N,N-dimethylbutan-1-aminium, phosphonium, and pyridinium moieties. Negatively charged moieties (anionic moieties) include without limitation carboxylate, sulfate, or sulfonate groups. In embodiments the ionic monomer is selected from the group consisting of 3-sulfopropylmethacrylate (SPMK), [2-(methacryloyloxy)-ethyl]trimethylammonium methylsulfate (METAS), 2-(Methacryloyloxy)ethyltrimethylammonium chloride (METAC), N-[2-(Methacryloyloxy)ethyl]-N,N-dimethylbutan-1-aminium, Bis(trifluoromethanesulfonyl)imide, N-(2-Acryloyloxyethyl)-N-benzyl-N,N-dimethylammonium chloride and methacrylamido propyl trimethyl ammonium chloride.

The term "neutral monomer" or "non-charged monomer" refers to a monomer that comprises non-charged monomers. In particular the term refers to a monomer that comprises no ionic moiety. The term "structural unit derived from a neutral monomer" refers to the portion of the ionic monomer that does not form a covalent bound to one or more other monomers during polymerization. In embodiments the structural unit derived from a neutral monomer comprises a non-charged moiety. In embodiments the structural unit derived from a neutral monomer comprises no charged moiety. In embodiments the structural unit derived from a neutral monomer comprises no ionic moiety. In embodiments the neutral monomer is selected from the group consisting of N,N-dimethylacrylamide (DMAA),hydroxyethylmethacrylate (HEMA), 2-(dimethylamino)ethyl acrylate (DMAEA), 2-hydroxyethyl acrylate (HEA), N-Isopropylacrylamide (NIPAM) and 2-(2-(2-methoxyethoxy)ethoxy)ethyl methacrylate.

The term "solvent" according to the present invention refers to a liquid substance in which the copolymer of the present invention is soluble. The solvent according to the present invention thus dissolves the copolymer of the present invention thereby forming a homogeneous liquid mixture with the copolymer, i.e., a solution of the copolymer. In embodiments the solvent comprises water and/or an alcohol. An alcohol comprised in the solvent can be without limitation selected from the group consisting of ethanol, isopropanol, butanol, propylene glycol, and glycerol. In one embodiment the composition of the present invention comprises an amount of the copolymer of 3 mg/mL to 150 mg/ml dissolved in the solvent, such as 3, 4, 5, 6, 7, 8, 9, 10, 15, 20, 25, 30, 35, 40, 45, 50, 55, 60, 65, 70, 75, 80, 85, 90, 95, 100, 105, 110, 115, 120, 125, 130, 135, 140, 145 or 150 mg/ml, preferably a concentration of 10 mg/mL to 80 mg/mL more preferably a concentration of 20 mg/mL to 40 mg/mL.

### Coating and substrates:

According to the present invention the term "coating" refers to a layer of the composition that is applied to the surface and covalently crosslinked and attached to the surface, preferably upon exposure to light of a wavelength of 250 to 500 nm. The coating according to the present invention provides water-film forming and anti-fogging properties. The term "water-film forming" or "anti-fogging" refers to the coating when in contact with water spreading the water on the surface, thereby resulting in the formation of a water layer instead of droplets, By spreading of water instead of droplet formation a thin, transparent water film is formed, preventing or reducing light scattering, fog formation and visual obstruction. Spreading of water particularly occurs on hydrophilic surfaces and coatings. In embodiments the coating to the present invention is hydrophilic having a water contact angle of equal or less than 30°, such as 30, 29, 28, 27, 26, 25, 24, 23,22, 21, 20, 19, 18, 17, 16, 15, 14, 13, 12, 11, 10, 9, 8, 7, 6, 5, 4, 3, 2, 1, or 0 °,preferably equal or less than 25°, more preferably equal or less than 20°.

The coating compositions of the present invention can be applied to the surface of a substrate by various methods including spray coating, dip coating, rotational coating, doctor blading, drop coating and/or applied with a cloth. "Spray coating" refers to a method of applying a coating composition onto a surface by using a spray technique thereby forming a thin film of the composition on the surface. This method comprises atomizing the coating composition into fine droplets by a spray nozzle and then applying the composition to the surface of a substrate. "Dip coating refers to a method of applying a coating composition to a surface of a substrate by immersing (dipping) the substrate into a liquid coating composition. After immersion, the substrate is removed from the coating composition at a controlled speed, allowing the coating material to adhere to the surface and form a layer. "Rotational coating" refers to a method of applying a coating composition to the surface of a substrate by rotating the substrate while applying the coating composition, usually in liquid form. The method usually comprises the steps of mounting the substrate to a device with a rotating mechanism, spinning the substrate at a controlled speed, applying the coating composition to the substrate such as by spraying or pouring and spreading of the coating composition on the surface of the substrate by the rotation (also termed centrifugal spreading). "Doctor blading" or "doctor blade coating" refers to a method of applying a coating composition to the surface of a substrate by spreading a coating composition across the surface of the substrate using a blade. The method usually comprises the steps of applying a coating composition to the surface of the substrate and spreading the coating composition by passing the blade over the surface of the substrate. The thickness of the layer of the coating composition applied to the surface of the substrate is controlled by the distance between the blade and the surface. A larger distance between the surface and the blade results in a thicker layer, while a smaller gap results in a thinner layer. "Drop coating" refers to a method of applying a coating composition to the surface of a substrate by depositing individual drops of the coating composition onto the surface of a substrate and subsequent spreading of the composition on the surface due to gravity, surface tension, or through external forces applied to the substrate (like tilting or spinning). A person skilled in the art is well aware of methods and means for performing these coating methods.

The terms "manual coating", "manual application", "manually" refers to manually applying and spreading a coating composition to a surface of a substrate such as by using a cloth, a brush, a sponge and/or a roller. Manual coating may further comprise spilling, dropping or directly applying the coating composition onto the surface such as by a cloth a brush, a sponge and/or a roller, and spreading the composition manually such as by using a cloth, a brush, a sponge and/or a roller.

The term "substrate" refers to an object or material the coating composition of the present invention is applied to. In embodiments the coating composition is applied to the surface of the substrate. According to the present invention the surface of the substrate comprises C-H moieties to which the coating composition of the present invention can be covalently attached to by a C.H insertion reaction upon activation of the diazo ester moiety of the copolymer of the invention by light. In embodiments the material of the substrate and/or the surface of the substrate is selected from glass, a silanized surface such as silanized glass and silanized metal, and plastics, wherein the plastics is preferably selected from the group consisting of polymethylmethacrylate (PMMA), polycarbonate (PC), polyethylene (PE), polypropylene (PP) and copolymers thereof. In one embodiment the substrate is preferably selected from glass, glasses, safety glasses, a car windshield, a car pane, a window, a mirror, a visor, a camera lens, a microscope lens, a car headlight, a solar panel, a medical device such as an endoscope and a surgical instrument, a shower door, a bathroom tile, a greenhouse panel and/or a face shield.

The term "primer" refers to a coating that is applied to the surface of a substrate prior to the application of a second coating or a paint. A primer usually enhances the adherence and applicability of the second coating or paint applied to the surface of a substrate.

The coating compositions of the invention may be used as a primer and enhance the hydrophilicity of the surface of a substrate thereby increasing adherence and applicability of a second water-based coating or hydrophilic paint to the surface of the substrate. In embodiments the coating compositions of the invention may thus be used as a primer for a hydrophilic paint such as for hydrophilic facade paints.

### FIGURES

The invention is demonstrated by way of the example through the figures disclosed herein. The figures provided represent particular, non-limiting embodiments and are not intended to limit the scope of the invention.

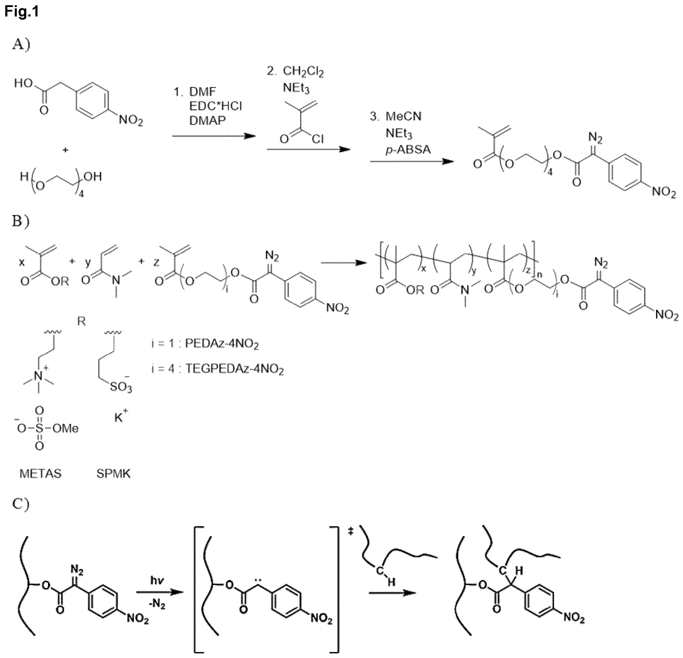

**Fig.1****:** Synthesis scheme of a copolymer comprised in the composition according to the preset invention. A) Synthesis of the diazo crosslinker nitroTEGPEDAz via twofold esterification followed by a Regitz diazo transfer. B) Copolymerization (terpolymerization) of the diazo crosslinkers with various ionic monomers (and DMAA). C) Photochemical activation of the diazo group releases nitrogen and forms a carbene, which inserts into adjacent C-H bonds generating network points in the polymer.

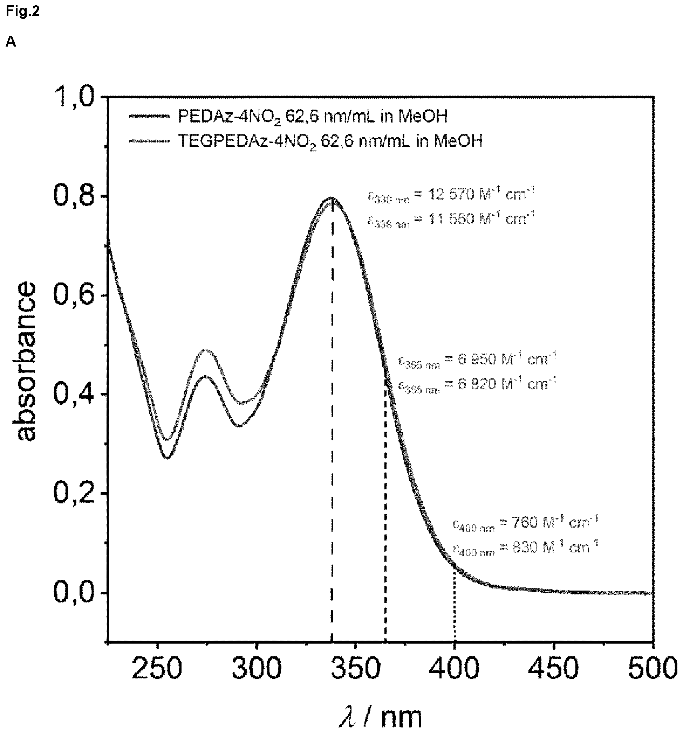

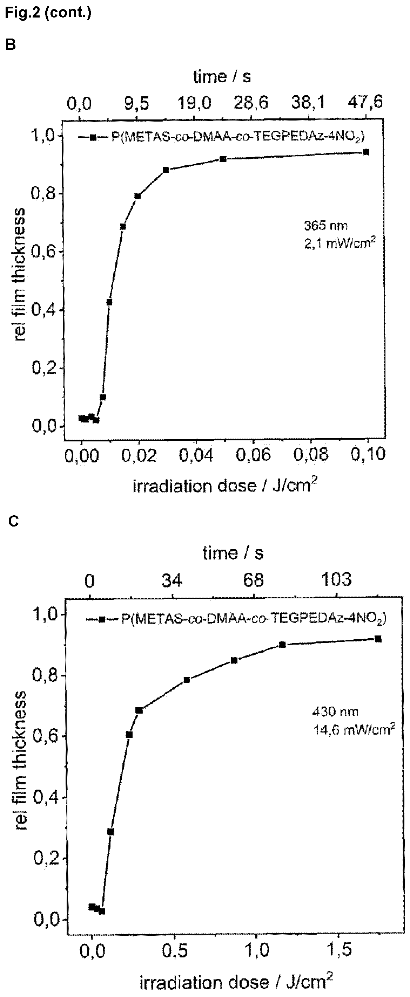

**Fig.2****:** A) UV-Vis spectra of nitroPEDAz and nitroTEGPEDAz in MeOH: Both crosslinkers show pronounced absorption in the UV-A region up to the visible range, so that excitation is also possible without UV lamps. Gel content measurements of P(METAS-co-DMAA-co-nitroTEGPEDAz) show complete network formation as a result of irradiation at a wavelength of *λ* = 365 nm after a dose of *H* = 0.1 J cm⁻² (B) and at a wavelength of *λ* = 430 nm after a dose of H = 1.75 J cm⁻² (C).

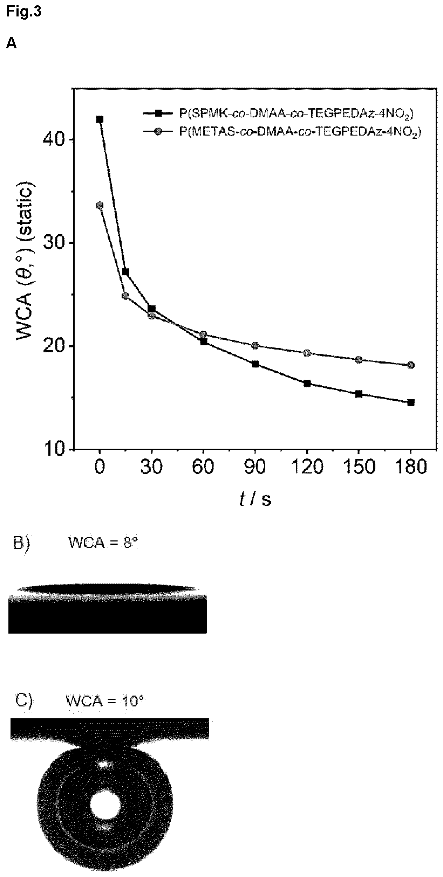

**Fig. 3**: A) Time dependence of the water contact angles of P(SPMK-*co*-DMAA-*co-*NitroTEGPEDAz) and P(METAS-*co*-DMAA-*co*-nitroTEGPEDAz), which decrease due to the swelling of the network and are *θ* = 15 ° and θ = 18 ° after 3 minutes, respectively. The WCA of P(SPMK-co-nitroPEDAz) is close to the superhydrophilic range according to both the sessile drop method (B) and the captive bubble method (C).

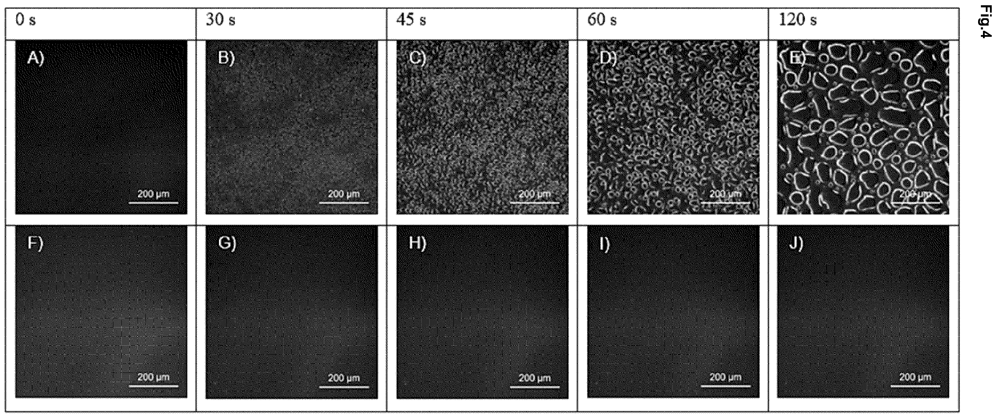

**Fig.4****:** Microscopic images of an uncoated (A-E) and a P(SPMK-co-nitroPEDAz)-coated Si wafer (F-J) exposed to conditions below the dew point after different times. While dropwise condensation is observed on the uncoated wafer, condensation on the coated wafer occurs as a uniform film.

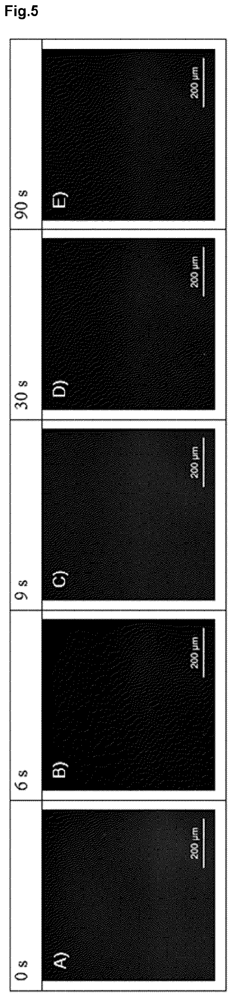

**Fig. 5****:** Microscopic images of the coated wafer after extensive washing under conditions below the dew point show interference patterns and again filmwise condensation.

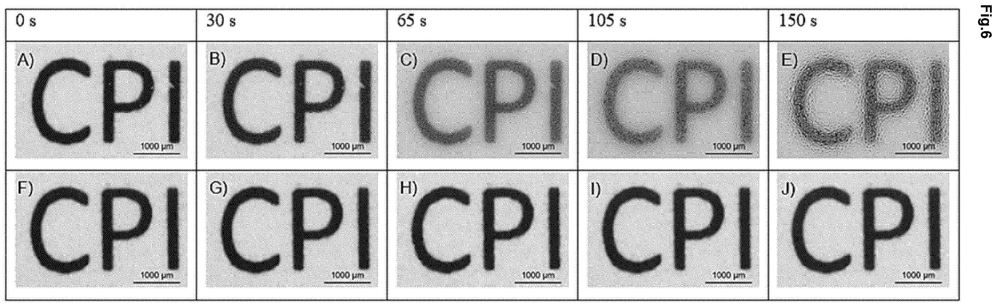

**Fig. 6****:** Microscopic time-lapse images of an uncoated (A-E) and a P(SPMK-co-nitroPEDAz)-coated glass wafer (F-J) placed on lettered paper and exposed to a dew point undershoot. As a result of light scattering from condensed water droplets, the view of the text under the uncoated wafer is blurred, whereas no loss of transparency is observed with the coated wafer.

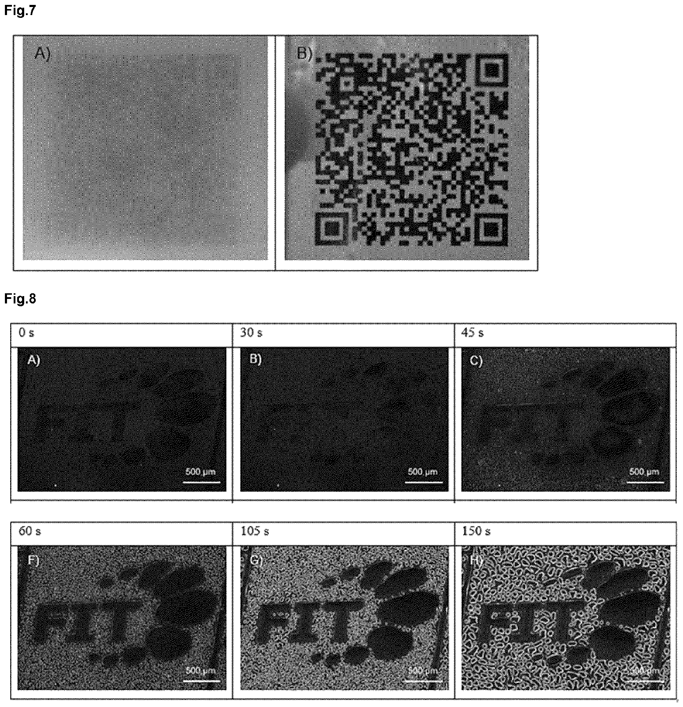

**Fig. 7****:** Photographs of an uncoated glass wafer positioned over a QR and exposed to conditions below the dew point show a severe clouding of the logo (A), whereas for a glass wafer coated with P(SPMK-co-nitroPEDAz) under the same conditions the QR code can still be scanned (B).
**Fig. 8****:** Microscopic time-lapse images of a P(SPMK-co-nitroPEDAz) coated and photochemically structured wafer exposed to conditions below the dew point. After interference patterns, dropwise and filmwise condensation can be observed side by side, so that the microstructure is clearly visible.

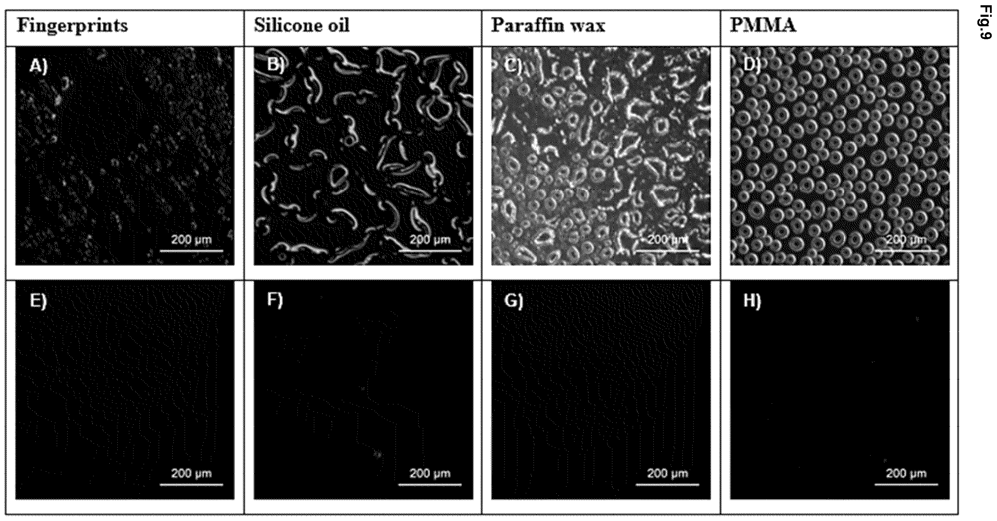

**Fig. 9****:** Microscopy images of differently contaminated anti-fog coated wafers before (A-D) and after coating with (PSPMK-co-nitroPEDAz) (E-H) exposed to conditions below the dew point after 90 s. After the loss of anti-fog properties due to soiling, these properties can be restored very easily by re-coating.

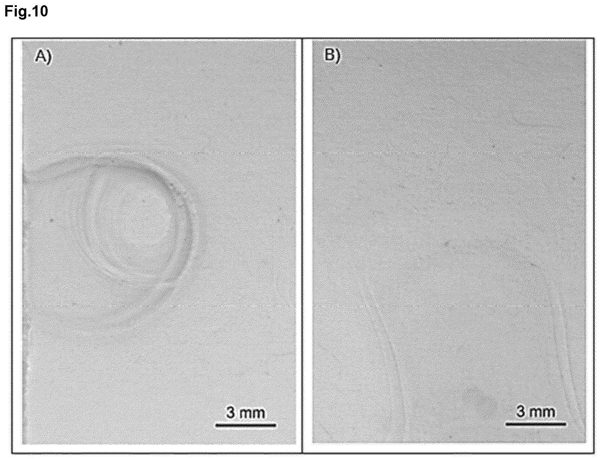

**Fig. 10****:** Photos of an uncoated (A) and a glass wafer coated with P(METAS-co-DMAA-co-nitroTEGPEDAz) (B) after a liquid film of an aqueous dye/polymer solution has dried: In contrast to the untreated wafer, the hydrophilic surface of the coated wafer allows a uniform distribution of the solutes.

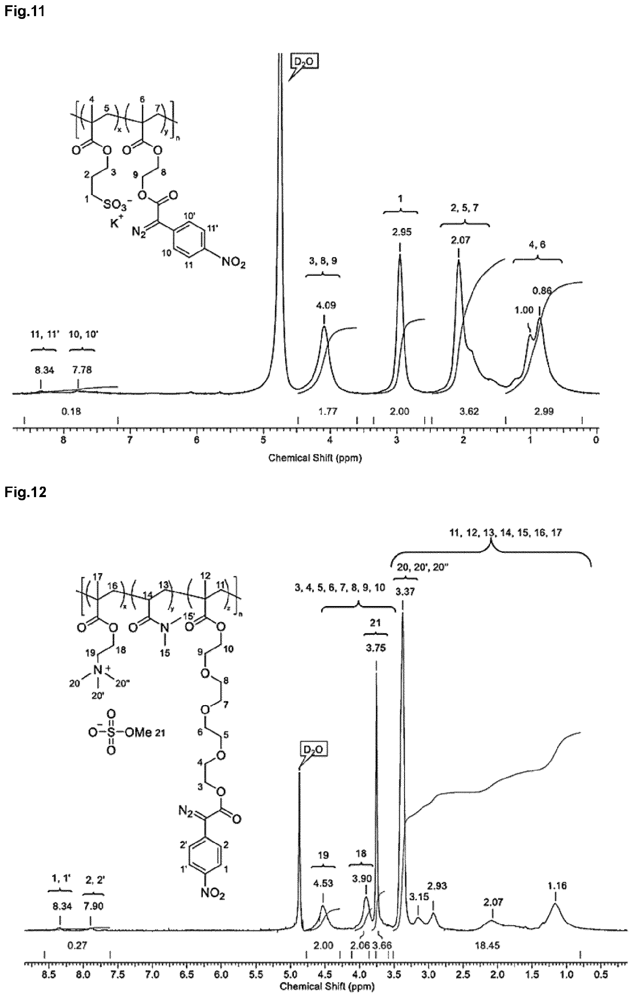

**Fig.11****:** NMR-spectrum of P(SPMK-co-PEDAz-4NO₂).
**Fig.12****:** NMR-spectrum of P(METAS-co-DMAA-co-TEGPEDAz-4NO₂)

### EXAMPLES

The invention is demonstrated through the examples disclosed herein. The examples provided represent particular embodiments and are not intended to limit the scope of the invention. The examples are to be considered as providing a non-limiting illustration and technical support for carrying out the invention.

### Synthesis of the crosslinkable monomers nitroPEDAz and nitroTEGPEDAz and copolymers comprising structural unity derived thereof

Copolymers were synthesized from ionic and neutral monomers, such as 3-sulfopropyl methacrylate potassium salt (SPMK), [2-(methacryloyloxy)-ethyl]trimethylammonium methyl sulfate (METAS) or N,N-dimethylacrylamide (DMAA) with a the photochemically active monomer comprising a crosslinkable nitro substituted diazophenyl ester moiety (methacrylate PEDAz-4NO₂ (nitroPEDAz)), and a more hydrophilic crosslinkable monomer with a tetraethylene glycol spacer (TEGPEDAz-4NO₂ (nitroTEGPEDAz)). The copolymers can be applied to surfaces of varying polarity by conventional coating techniques. Both diazo moieties enable irradiation and cross-linking in the visible or near-UV range, turning the coating into a surface attached polymer network.

The literature known crosslinkable monomer nitroPEDAz was synthesized according to a procedure described previously.(33) The more hydrophilic photo crosslinkable monomer nitroTEGPEDAz was synthesized in a three-step procedure (Figure 1 A). First, 4-nitrophenylacetic acid is esterified with tetraethylene glycol (TEG) according to a Steglich esterification described in literature, whereby the overreaction to the disubstituted product is prevented by an excess of TEG.(33,38) A second esterification reaction is then carried out, in which the remaining hydroxyl group is reacted with methacryloyl chloride to form a methyacrylate. In a final step, the diazo group is introduced at the active methylene group adjacent to the ester group via the Regitz diazo transfer.(39)

Statistical copolymers were obtained by free radical polymerization of the crosslinkers via their terminal double bond with different monomers (Figure 1 B). Polymerization was carried out at 30 °C with the initiator 2,2'-azobis(4-methoxy-2,4-dimethyl valeronitrile) (AMDVN) and at 60 °C with azobisisobutyronitrile (AIBN) as initiator. The low temperature during polymerization with AMDVN ensures that no thermally induced premature decomposition of the diazo group occurs. However, this risk is significantly lower with nitro-substituted PEDAz compounds than with unsubstituted PEDAz, as the nitro group stabilizes the electron-rich diazo group through a push-pull effect in a mesomeric manner. Elevated temperatures during polymerization reduce solubility problems, which occur primarily in the copolymerization of ionic monomers with nitroPEDAz due to their different polarity. Due to the hydrophilic TEG spacer, nitroTEGPEDAz can also be polymerized at low temperatures in methanol or methanol/water mixtures with the ionic monomers SPMK and METAS in solution, which makes the reaction procedure very convenient. In addition, terpolymers with a DMAA content of 25% were synthesized, which facilitate the wetting of the copolymer system on hydrophobic surfaces without restricting the anti-fogging properties too much. The synthesized polymers have a number average molecular weight between 30 and 100 kg/mol⁻¹, and a crosslinker content of about 5 %, so that the number of crosslinker units per chain is in the range of 10-30.

The synthesis of exemplary copolymers P(SPMK-co-PEDAz-4NO₂) and P(METAS-co-DMAA-co-TEGPEDAz-4NO₂) is exemplary shown below.

### P(SPMK-co-PEDAz-4NO₂) - Synthesis

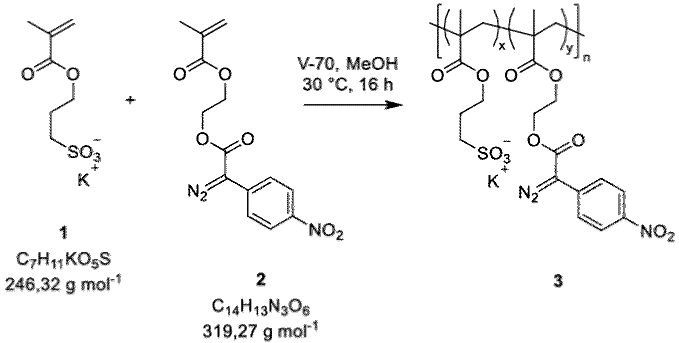

A suspension of 3-sulfopropyl methacrylate potassium salt, (SPMK, **1**, 2.341 g, 9.50 mmol) and 2-(2-diazo-2-(4-nitrophenyl)acetoxy)ethyl methacrylate (PEDAz-4NO₂, **2**, 0.162 g, 0.51 mmol, 0.053 eq.), in MeOH (20 mL) was reacted under N₂ atmosphere with 2,2'-azobis(4-methoxy-2,4-dimethylvaleronitrile) (V-70, 9.3 mg, 0.030 mmol, 0.3 mol %), degassed several times and stirred for 16.5 h at 30 °C. The residue was dispersed in cold MeOH (400 mL), the solvent decanted off and the residue was taken up in H₂O (50 mL). The crude product was purified by dialysis with water (2 · 2500 mL) and freeze-dried. The copolymer (**3**, 1.683 g, 67%) was obtained as a yellow solid.

### P(METAS-co-DMAA-co-TEGPEDAz-4NO₂) - Synthesis

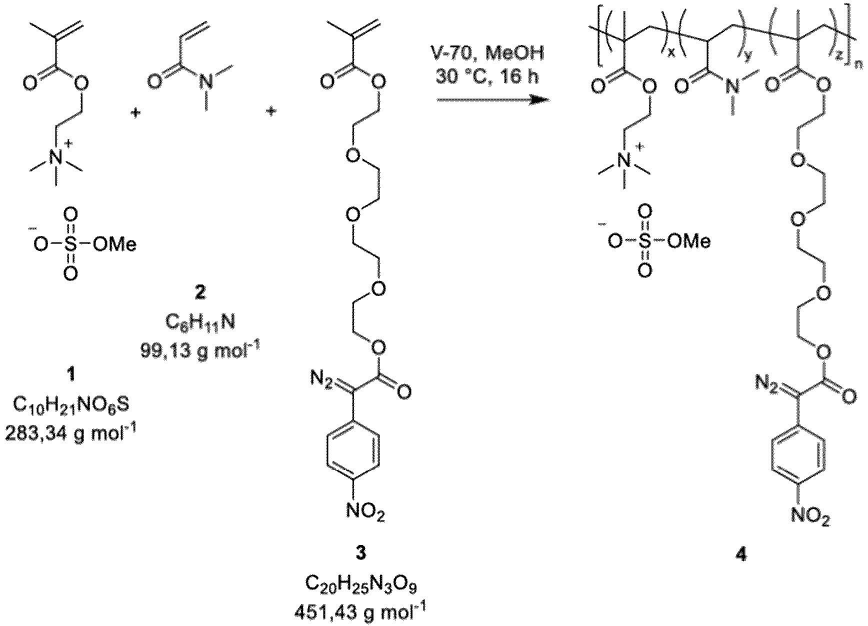

A solution of [2-(methacryloyloxy)ethyl]trimethylammonium methylsulfate (METAS, **1**, 1.979 g, 6.98 mmol), N,N-dimethylacrylamide (DMAA, **2**, 0.251 g, 2.53 mmol, 0.362 eq), 14-diazo-14-(4-nitrophenyl)-13-oxo-tetraethylene glycol methacrylate (TEGPEDAz-4NO₂, **3**, 0.222 g, 0.49 mmol, 0.070 eq.), in MeOH (10 mL) was reacted under N2-atmospheres with 2,2'-azobis(4-methoxy-2,4-dimethylvaleronitrile) (V-70, 15.4 mg, 0.050 mmol, 0.5 mol %), degassed several times and stirred for 16.5 h at 30 °C. The residue was precipitated in cold iPrOH (400 mL), the solvent was decanted off and the residue was taken up in H₂O (50 mL). The crude product was separated by dialysis with water (2 · 2500 mL) and freeze-dried. The copolymer (**4**, 1.078 g, 44 %) was obtained as a yellow solid.

### Coating and network formation

Photochemical activation of the diazo group results in the elimination of N₂, so that a carbene is generated that can subsequently insert into adjacent polymer chains and, in the case of coatings, into the surface of a substrate, thus forming surface-attached polymer networks (CHic reaction) (Figure 1C).(33)

The absorption behavior of nitroTEGPEDAz is very much comparable to that of nitroPEDAz (Figure 2A), with an appreciable extinction coefficient at a wavelength of λ = 400 nm so that activation by visible light is given.

Network formation was investigated by measuring the gel content. To do this, the corresponding polymers were first applied to silanized wafers by dip coating or spin coating. For better wetting of DMAA-free copolymer solutions on the relatively hydrophobic silane, a very thin layer of P(DMAA-*co*-PEDAz-4NO₂) (5-10 nm) was first applied as an adhesion promoter and crosslinked by irradiation. This step is obsolete for terpolymers with DMAA, as aqueous solutions of these polymers also wet hydrophobic surfaces well. For the gel content measurements, the layer thickness of polymer films was measured before irradiation for varying times. After irradiation and extraction, the film thickness was recorded again, and the values were put in relation to each other. This is shown in 2B and C for crosslinking at a wavelength of *λ* = 365 nm and *λ* = 430 nm. The gel formation kinetics follow a typical percolation process that can be observed in the induction phase before the percolation point is reached.(40) this stage, there is no interconnected network and the isolated clusters can be washed out. As the percolation threshold is exceeded, the gel content increases continuously until complete attachment is achieved. Due to the significantly higher extinction coefficient of nitroTEGPEDAz at a wavelength of *λ* = 365 nm compared to *λ* = 430 nm, considerably lower doses are required to achieve complete attachment at the former wavelength. However, it's worth noting that the rapid cross-linking, which takes less than 2 minutes, occurs with surprisingly low energy radiation in the visible range.

The resulting hydrophilic polymer networks exhibit low water contact angles (WCA). Terpolymerization with DMAA reduced the proportion of SPMK or METAS from 95 % to 70 %, which leads to better wetting of the polymers on hydrophobic surfaces, but at the same time reduces the hydrophilicity, albeit only slightly, so that a good tradeoff is achieved. Figure 3A shows static WCAs (of P(SPMK-co-DMAA-co-nitroTEGPEDAz) and P(METAS-*co*-DMAA-*co-*nitroTEGPEDAz) as a function of time. As a result of swelling, the contact angles decrease steadily until values of *θ* = 15 ° and *θ* = 18 ° are obtained after 3 minutes. For P(SPMK-co-nitroPEDAz), even lower contact angles close to the superhydrophilic range were measured using both the sessile drop method (Fig. B) and the captive bubble method (Fig. C).(41)

### Anti-fogging properties

To investigate the anti-fogging properties, tropical conditions were simulated in a climate chamber with a relative humidity of *f* = 80 % and a temperature of *T =* 30 °C. After positioning the sample, the condensation of water was investigated as a function of time using optical microscopy. Here, the sample was placed on a pre-cooled metal block, which prevents rapid warming of the sample due to its relatively high heat capacity, and the condensation of water as a function of time was analyzed using optical microscopy in the form of photo recordings. Figure 4 compares images taken at different times of an uncoated Si wafer and a wafer coated with P(SPMK-co-nitroPEDAz). The surface of the Si wafer is not hydrophilic enough, so that water condenses in the form of small droplets, which coalesce with increasing time and form larger droplets (A-E). In contrast, no droplet formation can be recognized at any time on the coated wafer (F-J). A homogeneous, continuous film of water is formed here so that the view onto the wafer is not restricted.

The wafer was then extensively washed with water and the experiment repeated to demonstrate the longevity of the coating, with the results again shown as microscopic images in 5A-E. Here, images were taken at different times than those in 4 in order to better visualize the water film formation properties of the coating. At short times, the color tone of the coating changes several times from light to dark and back again. This can be explained by interference effects on thin layers. Due to the low thickness of the coating in the range of around 100 nm, which is even below the wavelength of visible light, the path difference between the two emerging beams, which is caused by reflection from the coating or wafer, is very small compared to the coherence length of the microscope's light source.(42) After the start of the experiment, the polymer film begins to swell under humid conditions, increasing its thickness and changing its refractive index. This also results in a time-dependent change in the path difference, whereby this becomes successive integer multiples of different wavelengths of the rays emitted by the light source and constructive and destructive interference at regular intervals, which is recognizable in an oscillation of the color tone in the microscope images.

Even after extensive washing and placing the sample in water for 1 h, the coating retains its film-forming properties so that no drop formation is observed. The cross-linking and surface attachment of the polymer film following irradiation results in long-lasting anti-fog coatings.

In order to investigate the optical properties, especially transmission, after condensation, glass wafers were coated with P(SPMK-co-nitroPEDAz), positioned on paper printed with lettering and exposed to the same conditions as in the previous experiments in the climate chamber. An untreated wafer was also measured again as a reference sample. In the microscopy images, shown in 6, the focus of the microscope was set on the glass surface so that the droplets appear sharp, making the underlying lettering slightly blurred. On the untreated glass, droplet formation can be seen after about 30 seconds (B), as with the silicon substrate in 4. As time goes by, the small droplets coalesce into larger ones, so that the view of the underlying lettering is significantly reduced. In contrast, no noteworthy decrease in transparency can be seen with the anti-fog coated glass wafer. The homogeneous water film allows light to pass through unhindered, so that excellent optical properties are maintained even under very humid conditions.

For the experiment described above, the glass wafer was placed directly on the lettering. In everyday life, there is usually a distance between the fogged object (glasses, visor) and the environment that is observed through it. Accordingly, in a further experiment, a glass wafer coated on both sides with P(SPMK-co-nitroPEDAz) by dip coating and an uncoated glass wafer were positioned at a distance of about 4 cm above a logo and the condensation of water was documented by camera images (Figure 7). The wafers were previously cooled to *T* = 5°C and then placed above the QR code, the logo, under ambient conditions (*T* = 21°C, *f =* 40 %) so that the surface temperature of the glass substrate is below the dew point. While the uncoated wafer fogs up completely and the view of the QR code is severely obscured, the coated wafer retains its good optical properties so that the QR code can still be scanned without any problems, which is not possible without anti-fog coating.

Copolymers with nitroPEDAz can be utilized as negative photoresists. R_{USITOV} *et al.* demonstrated this using the example of a protein-repellent hydrogel that can be surface-attached in a spatially controlled manner via a photomask by irradiation in direct sunlight.(33) The fabrication of structured samples on a wafer coated with P(SPMK-co-nitroPEDAz) was achieved analogously by irradiation at A = 365 nm with a dose of 100 mJ cm⁻². An example for a high-resolution structure obtained can be seen in 8A. In anti-fogging experiments under the aforementioned tropical conditions in the climate chamber, the previously presented effects can be seen again: Thus, after 30 s (B), distinct interference patterns emerge on the thin polymer layer, persisting even at 45 seconds (C) and 60 seconds (D), until the eventual formation of a continuous water film. In direct comparison, droplet formation and growth can be clearly seen on the untreated surface. Due to the different type of water condensation, filmwise and dropwise the structure retains its high resolution even after long periods and large amounts of condensed water. The image taken after 150 s (F) also clearly shows the three-dimensional structure of the water film, whereby the different hydrophilic properties of coating and wafer and the surface tension of the water prevent the water film from flowing apart.

These structures also show anti-fogging properties at the coated areas. However, when the radius of the forming droplets is significantly larger than the line width of the structure, coalescence of the droplets occurs, so that the entire structure is covered with a film of water and can no longer be recognized in its level of detail. In general, the droplets on untreated glass or Si surfaces have a diameter of up to d = 200 µm after several minutes under the conditions investigated here, so that the effect of micro- or nanostructuring below this range is limited.

A major advantage of the coating compositions presented is the ability to deal with damage and loss of function of the coating due to contamination or scratches. While it is very difficult to restore the anti-fog properties of some systems based on surface-bound molecules after soiling, the copolymers and coating compositions described here can be very easily and in a straightforward manner reapplied to the substrate and cross-linked in just a few seconds. To demonstrate this, Si wafers coated with P(METAS-*co*-DMAA-*co*-nitroTEGPEDAz) were heavily contaminated in certain locations of the substrate by fingerprints and various hydrophobic substances such as oils and waxes and in one case coated with P(MMA-co-PEDAz) and crosslinked. After briefly washing with deionized (DI) water and isopropyl alcohol, the samples were exposed to the previously described conditions in the climate chamber. Fig. 9 A-D shows microscopy images after a time of t = 90 s. In all cases, the formation of droplets or irregular condensation patterns can be seen, which severely impairs the optical properties. The fogging experiments were repeated after re-coating with P(SPMK-*co*-nitroPEDAz) and crosslinking, again recording condensation after a time of t= 90 s (Figure 9 E-H). In all cases, a restoration of the anti-fogging properties can be recognized by the homogeneous water film formation, despite extreme soiling beforehand. This is due to the fact that the hydrophilic copolymer not only binds covalently to the organic substrate, but also forms a network. In this way, any small remaining oily spots are covered by this polymer network: the hydrogel network spans the substrate like a kind of thin cloth and is covalently bound to the surface in the areas that are not covered with the contaminants. Therefore, an incompletely removed fingerprint is covered and embedded in the hydrogel network instead of remaining visible.

### Primer for water-based coatings

The ability of the polymers shown in this study to form uniform water films on a coated surface is attractive not only for anti-fog applications, but also for the priming of water-based paints and lacquers. A solution consisting of the water-soluble, yellow food dye tartrazine, (0.5 mg/mL) and PDMMA (15 mg/mL) in water was deposited by drop coating to both an untreated glass wafer and a wafer coated with P(METAS-co-DMAA-co-nitroTEGPEDAz). After drying, both wafers were characterized using optical microscopy (Figure 10). On the untreated wafer, the interactions of the solutes with the solvent are clearly favored over those with the glass substrate, so that dye and polymer enrich in the ever-decreasing volume of the liquid droplet during drying and finally precipitate, forming an inhomogeneous pattern (Figure 10 A). The hydrophilic polymer coating facilitates attractive interactions between the dissolved particles and the solid phase, resulting in a much more uniform distribution of PDMMA and dye on the treated wafer, with significantly less pronounced drying patterns, so that a nicely yellow-colored glass substrate is obtained (Figure 10B).

### Conclusion

In summary, copolymers and coating compositions are presented that exhibit excellent water film forming properties, as they can be easily synthesized by free radical polymerization, are photochemically curable. Ionic monomers such as SPMK and METAS ensure pronounced hydrophilicity in the copolymer and neutral monomers such as DMAAfacilitate wetting of a wide range of surfaces. Built-in reactive crosslinkers such as NitroPEDAz and the more hydrophilic derivative Nitro-TEGPEDAz are activated with low doses of light in the low-energy UV-A range and even with light in the visible range, so that the initiated CHic reaction proceeds very quickly resulting in the formation of a robust and durable surface-attached network. Surfaces with such coatings have low water contact angles, exhibit film-wise condensation of water and retain their high transparency even under very humid conditions. In addition, photochemical patterning with masks makes it very easy to structure surfaces in order to achieve spatially controlled anti-fog properties. The strong water film-forming properties of such films also allow them to be used as a primer for water-based coatings, which has also been demonstrated exemplary for the water-soluble, yellow food dye tartrazine.

In addition to excellent anti-fogging properties, the polymer systems also impress with their other features: The solubility of polymers in aqueous or alcoholic media makes the use of organic solvents, which pose a potential health risk, superfluous. The incorporation of a polar but non-ionic comonomer allows to apply the coating composition to an even broader range of different surfaces with different polarities, including glasses and polymers Further, the coating compositions can be cross-linked within a few seconds using low-energy light, rendering the process fast and efficient. Even brief exposure to sunlight is sufficient so that, unlike the processes described in the prior art, no special lamps and equipment are required.(10,13,36) Additionally, the coating compositions of the invention allow a new coating to be reapplied once the surface becomes dirty or slightly scratched and the anti-fog properties are lost. In this way, the surface is rejuvenated and the same high-quality anti-fog effect is restored. The coating compositions of the invention thus enable surface conditioning without any special equipment and prior knowledge and are further applicable for many applications such as mirrors, glasses, or motorcycle visors, or as a primer for hydrophilic, water-based coatings and paints, especially for non-professionals.

### REFERENCES

(1) Agam, N.; Berliner, P. R. Dew formation and water vapor adsorption in semi-arid environments-A review. Journal of Arid Environments 2006, 65 (4), 572-590. DOI: 10.1016/j.jaridenv.2005.09.004.
(2) Beysens, D. The formation of dew. Atmospheric Research 1995, 39 (1-3), 215-237. DOI: 10.1016/0169-8095(95)00015-J.
(3) Fayazbakhsh, M. A.; Bahrami, M. Analytical Modeling of Mist Condensation by Natural Convection Over Inclined Flat Surfaces. In Volume 1: Heat Transfer in Energy Systems; Thermophysical Properties; Theory and Fundamental Research in Heat Transfer; American Society of Mechanical Engineers, 07142013. DOI: 10.1115/HT2013-17219.
(4) Durán, I. R.; Laroche, G. Current trends, challenges, and perspectives of anti-fogging technology: Surface and material design, fabrication strategies, and beyond. Progress in Materials Science 2019, 99, 106-186. DOl: 10.1016/j.pmatsci.2018.09.001.
(5) Durán, I. R.; Laroche, G. Water drop-surface interactions as the basis for the design of anti-fogging surfaces: Theory, practice, and applications trends. Advances in colloid and interface science 2019, 263, 68-94. DOl: 10.1016/j.cis.2018.11.005. Published Online: Nov. 24, 2018.
(6) Dain, S. J.; Hoskin, A. K.; Winder, C.; Dingsdag, D. P. Assessment of fogging resistance of anti-fog personal eye protection. Ophthalmic & physiological optics : the journal of the British College of Ophthalmic Opticians (Optometrists) 1999, 19 (4), 357-361. DOI: 10.1046/j.1475-1313.1999.00418.x.
(7) Ren, S.; Wang, L.; Yu, H.; Haroon, M.; Ullah, R. S.; Haq, F.; Khan, R. U.; Fahad, S. Recent progress in synthesis of antifogging agents and their application to agricultural films: a review. J Coat Technol Res 2018, 15 (3), 445-455. DOI: 10.1007/s11998-018-0051-x.
(8) Liu, C.-H.; Ay, C.; Kan, J.-C.; Lee, M.-T. The Effect of Radiative Cooling on Reducing the Temperature of Greenhouses. Materials (Basel, Switzerland) 2018, 11 (7). DOI: 10.3390/ma11071166. Published Online: Jul. 9, 2018.
(9) Howarter, J. A.; Youngblood, J. P. Self-Cleaning and Anti-Fog Surfaces via Stimuli-Responsive Polymer Brushes. Adv. Mater. 2007, 19 (22), 3838-3843. DOI: 10.1002/adma.200700156.
(10) Yang, L.; Huo, R.; Zhang, B. Dual functional coatings with antifogging and antimicrobial performances for endoscope lens, via facile adsorption-cross-linking strategy. Colloids and surfaces. B, Biointerfaces 2021, 206, 111933. DOl: 10.1016/j.colsurfb.2021.111933. Published Online: Jun. 18, 2021.
(11) Fox, J.; Wie, J. J.; Greenland, B. W.; Burattini, S.; Hayes, W.; Colquhoun, H. M.; Mackay, M. E.; Rowan, S. J. High-strength, healable, supramolecular polymer nanocomposites. Journal of the American Chemical Society 2012, 134 (11), 5362-5368. DOl: 10.1021/ja300050x. Published Online: Mar. 9, 2012.
(12) Piromchai, P.; Kasemsiri, P.; Thanaviratananich, S. Alternative agents to prevent fogging in head and neck endoscopy. Clinical medicine insights. Ear, nose and throat 2011, 4, 1-4. DOI: 10.4137/CMENT.S6597. Published Online: Jan. 10, 2011.
(13) Gong, X.; Yu, H.; Wang, L.; Hu, J.; Wang, L.; Li, C. Tailoring amphiphilic polymeric coating with durable antifogging performance. Progress in Organic Coatings 2023, 179, 107523. DOI: 10.1016/j.porgcoat.2023.107523.
(14) Briscoe, B. J.; Galvin, K. P. The effect of surface fog on the transmittance of light. Solar Energy 1991, 46 (4), 191-197. DOI: 10.1016/0038-092X(91)90063-3.
(15) Pieters, J. G.; Deltour, J. M.; Debruyckere, M. J. Light transmission through condensation on glass and polyethylene. Agricultural and Forest Meteorology 1997, 85 (1-2), 51-62. DOI: 10.1016/S0168-1923(96)02393-3.
(16) Drelich, J.; Chibowski, E.; Meng, D. D.; Terpilowski, K. Hydrophilic and superhydrophilic surfaces and materials. Soft Matter 2011, 7 (21), 9804. DOI: 10.1039/c1sm05849e.
(17) Fromel, M.; Sweeder, D. M.; Jang, S.; Williams, T. A.; Kim, S. H.; Pester, C. W. Superhydrophilic Polymer Brushes with High Durability and Anti-fogging Activity. ACS Appl. Polym. Mater. 2021, 3 (10), 5291-5301. DOI: 10.1021/acsapm.1c01090.
(18) Chevallier, P.; Turgeon, S.; Sarra-Bournet, C.; Turcotte, R.; Laroche, G. Characterization of multilayer anti-fog coatings. ACS applied materials & interfaces 2011, 3 (3), 750-758. DOI: 10.1021/am1010964. Published Online: Mar. 7, 2011.
(19) Shi, J.; Xu, L.; Qiu, D. Effective Antifogging Coating from Hydrophilic/Hydrophobic Polymer Heteronetwork. Advanced science (Weinheim, Baden-Wurttemberg, Germany) 2022, 9 (14), e2200072. DOI: 10.1002/advs.202200072. Published Online: Mar. 14, 2022.
(20) Gong, X.; Yu, H.; Wang, L.; Liu, X.; Ren, S.; Huang, Y.; Huang, Z. Recent progress in the mechanisms, preparations and applications of polymeric antifogging coatings. Advances in colloid and interface science 2022, 309, 102794. DOI: 10.1016/j.cis.2022.102794. Published Online: Oct. 6, 2022.
(21) Herkert, N. J.; Kassotis, C. D.; Zhang, S.; Han, Y.; Pulikkal, V. F.; Sun, M.; Ferguson, P. L.; Stapleton, H. M. Characterization of Per- and Polyfluorinated Alkyl Substances Present in Commercial Anti-fog Products and Their In Vitro Adipogenic Activity. Environmental science & technology 2022, 56 (2), 1162-1173. DOI: 10.1021/acs.est.1c06990. Published Online: Jan. 5, 2022.
(22) Pelch, K. E.; Reade, A.; Wolffe, T. A. M.; Kwiatkowski, C. F. PFAS health effects database: Protocol for a systematic evidence map. Environment international 2019, 130, 104851. DOI: 10.1016/j.envint.2019.05.045. Published Online: Jul. 5, 2019.
(23) Panieri, E.; Baralic, K.; Djukic-Cosic, D.; Buha Djordjevic, A.; Saso, L. PFAS Molecules: A Major Concern for the Human Health and the Environment. Toxics 2022, 10 (2). DOI: 1 0.3390/toxics1 0020044. Published Online: Jan. 18, 2022.
(24) Ezzat, M.; Huang, C.-J. Zwitterionic polymer brush coatings with excellent anti-fog and anti-frost properties. RSCAdv. 2016, 6 (66), 61695-61702. DOI: 10.1039/C6RA12399F.
(25) Kobayashi, M.; Takahara, A. Tribological properties of hydrophilic polymer brushes under wet conditions. Chemical record (New York, N.Y.) 2010, 10 (4), 208-216. DOI: 10.1002/tcr.201000001.
(26) Billingham, N. C. Degradation and Stabilization of Polymers. In Materials Science and Technology; Cahn, R. W., Haasen, P., Kramer, E. J., Eds.; Wiley, 2006; pp 469-507. DOI: 10.1002/9783527603978.mst0412.
(27) Gewert, B.; Plassmann, M. M.; MacLeod, M. Pathways for degradation of plastic polymers floating in the marine environment. Environmental science. Processes & impacts 2015, 17 (9), 1513-1521. DOI: 10.1039/C5EM00207A. Published Online: Jul. 28, 2015.
(28) Prucker, O.; Naumann, C. A.; Rühe, J.; Knoll, W.; Frank, C. W. Photochemical Attachment of Polymer Films to Solid Surfaces via Monolayers of Benzophenone Derivatives. Journal of the American Chemical Society 1999, 121 (38), 8766-8770. DOI: 10.1021/ja990962.
(29) Prucker, O.; Brandstetter, T.; Rühe, J. Surface-attached hydrogel coatings via C,H-insertion crosslinking for biomedical and bioanalytical applications (Review). Biointerphases 2017, 13 (1), 10801. DOI: 10.1116/1.4999786. Published Online: Dec. 8, 2017.
(30) Kotrade, P. F.; Rühe, J. Malonic Acid Diazoesters for C-H Insertion Crosslinking (CHic) Reactions: A Versatile Method for the Generation of Tailor-Made Surfaces. Angew. Chem. 2017, 129 (46), 14597-14602. DOI: 10.1002/ange.201704486.
(31) Kost, J.; Bleiziffer, A.; Rusitov, D.; Rühe, J. Thermally Induced Cross-Linking of Polymers via C,H Insertion Cross-Linking (CHic) under Mild Conditions. Journal of the American Chemical Society 2021, 143 (27), 10108-10119. DOI: 10.1021/jacs.1c02133. Published Online: Jun. 16, 2021.
(32) Bleiziffer, A.; Kost, J.; Rühe, J. Thermal Structuring of Surface-Attached Polymer Networks by C,H Insertion Reactions. Macro Materials & Eng 2022, 307 (11). DOI: 10.1002/mame.202200345.
(33) Rusitov, D.; Deussen, F.; Rühe, J. Fast UV- and Visible Light Induced Polymer Network Formation Using Carbene Mediated C□H-insertion Based Crosslinking (CHic) Via Nitrophenyl Diazo Esters. Adv Materials Inter 2023. DOI: 10.1002/admi.202300316.
(34) Chan, C.-M.; Ko, T.-M.; Hiraoka, H. Polymer surface modification by plasmas and photons. Surface Science Reports 1996, 24 (1-2), 1-54. DOI: 10.1016/0167-5729(96)80003-3.
(35) Nikafshar, S.; Zabihi, O.; Ahmadi, M.; Mirmohseni, A.; Taseidifar, M.; Naebe, M. The Effects of UV Light on the Chemical and Mechanical Properties of a Transparent Epoxy-Diamine System in the Presence of an Organic UV Absorber. Materials (Basel, Switzerland) 2017, 10 (2). DOI: 10.3390/ma10020180. Published Online: Feb. 14, 2017.
(36) Liu, Q.; Locklin, J. Transparent Grafted Zwitterionic Copolymer Coatings That Exhibit Both Antifogging and Self-Cleaning Properties. ACS Omega 2018, 3 (12), 17743-17750. DOI: 10.1021/acsomega.8b02867.
(37) Toomey, R.; Freidank, D.; Rühe, J. Swelling Behavior of Thin, Surface-Attached Polymer Networks. Macromolecules 2004, 37 (3), 882-887. DOI: 10.1021/ma034737v.
(38) Lutjen, A. B.; Quirk, M. A.; Kolonko, E. M. Synthesis of Esters Via a Greener Steglich Esterification in Acetonitrile. Journal of visualized experiments : JoVE 2018 (140). DOI: 10.3791/58803. Published Online: Oct. 30, 2018.
(39) Xie, S.; Yan, Z.; Li, Y; Song, Q.; Ma, M. Intrinsically Safe and Shelf-Stable Diazo-Transfer Reagent for Fast Synthesis of Diazo Compounds. The Journal of organic chemistry 2018, 83 (18), 10916-10921. DOI: 10.1021/acs.joc.8b01587. Published Online: Aug. 27, 2018.
(40) Körner, M.; Prucker, O.; Rühe, J. Kinetics of the Generation of Surface-Attached Polymer Networks through C, H-Insertion Reactions. Macromolecules 2016, 49 (7), 2438-2447. DOI: 10.1021/acs.macromol.5b02734.
(41) Drelich, J.; Chibowski, E. Superhydrophilic and superwetting surfaces: definition and mechanisms of control. Langmuir : the ACS journal of surfaces and colloids 2010, 26 (24), 18621-18623. DOI: 10.1021/Ia1039893. Published Online: Nov. 19, 2010.
(42) Hecht, E. Optics, EBook, Global Edition, 5th ed.; Pearson Education Limited, 2017.

## Claims

1. A water-film forming **coating composition** comprising
a. a copolymer, wherein the copolymer comprises one or more structural units derived from a monomer comprising an ionic moiety (ionic monomer) and one or more structural units derived from a monomer comprising a diazo ester moiety (crosslinkable monomer), and
b. a solvent comprising water and/or an alcohol.

2. The water-film forming coating composition according to claim 1, wherein the copolymer additionally comprises one or more structural units derived from a non-charged monomer (neutral monomer).

3. The water-film forming coating composition according to any one of the preceding claims, wherein the copolymer
a. has a degree of polymerization (DP) of 50 to 5000, preferably between 100 to 1000, and/or
b. comprises 0.1 to 20 mol% structural units derived from the crosslinkable monomer, preferably 0.5 to 7.5 mol% structural units, more preferably 1 to 5 mol% structural units.

4. The water-film forming coating composition according to any one of the preceding claims, wherein the copolymer comprises
a. 60 to 95 mol% structural units derived from the ionic monomer, preferably 65 to 93 mol%, more preferably 70 to 90 mol%,
b. 0.1 to 20 mol% structural units derived from the crosslinkable monomer, preferably 0.5 to 7.5% structural units, more preferably 1 to 5% structural units, and
c. optionally 10 to 35 mol% structural units derived from the neutral monomer, more preferably 15 to 30 mol% structural units, more preferably 20 to 25 mol% structural units,

5. The water-film forming coating composition according to any one of the preceding claims, wherein the structural unit derived from the crosslinkable monomer forms a covalent bond with a C-H group by a C, H insertion reaction upon exposure to light of a wavelength of 250 to 500 nm, preferably 365 to 450 nm, more preferably 380 nm to 430 nm.

6. The coating composition according to any one of the preceding claims, wherein the crosslinkable monomer additionally comprises a hydrophilic linker, preferably a linear polyethylene glycol (PEG), more preferably a linear PEG having a degree of polymerization (DP) of 1 to 10.

7. The coating composition according to any one of the preceding claims, wherein the crosslinkable monomer is selected from the group consisting of 2-(2-Diazo-2-(4-nitrophenyl)acetoxy)ethyl methacrylate (PEDAz-4NO₂) and 14-Diazo-14-(4-nitrophenyl)-13-oxo-tetraethylenglycol methacrylate (TEGPEDAz-4NO₂)

8. The coating composition according to any one of the preceding claims, wherein
a. the ionic monomer is selected from the group consisting of 3-sulfopropylmethacrylate (SPMK), [2-(methacryloyloxy)-ethyl]trimethylammonium methylsulfate (METAS), 2-(methacryloyloxy)ethyltrimethylammonium chloride (METAC), N-[2-(methacryloyloxy)ethyl]-N,N-dimethylbutan-1-aminium, bis(trifluoromethanesulfonyl)imide, N-(2-acryloyloxyethyl)-N-benzyl-N,N-dimethylammonium chloride and methacrylamido propyl trimethyl ammonium chloride, and/or
b. the neutral monomer is selected from the group consisting of N,N-dimethylacrylamide (DMAA),hydroxyethylmethacrylate (HEMA), 2-(dimethylamino)ethyl acrylate (DMAEA), 2-hydroxyethyl acrylate (HEA), N-Isopropylacrylamide (NIPAM) and 2-(2-(2-methoxyethoxy)ethoxy)ethyl methacrylate.

9. A **crosslinkable monomer** comprising a diazo ester moiety, a hydrophilic linker and a polymerizable group, wherein the polymerizable group is selected from the group consisting of an acrylate and a methacrylate.

10. A **method** for depositing a water-film forming coating to a substrate, the method comprising
i. provision of a substrate,
ii. provision of a composition according to any one of claims 1 to 8,
iii. application of the composition to the surface of the substrate, and
iv. exposing the substrate to light of a wavelength of 250 to 500 nm, preferably 365 to 450 nm, more preferably 380 nm to 430 nm,
wherein by exposure to light the diazo ester moiety of the copolymer comprised in the composition is photochemically activated, a C,H-insertion reaction is initiated and a covalent surface attached polymer network is formed.

11. The method according to claim 10, wherein the substrate comprises an organic surface comprising C-H moieties, wherein the organic surface is preferably selected from glass, a silanized surface such as silanized glass and silanized metal, and plastics, wherein the plastics is preferably selected from the group consisting of polymethylmethacrylate (PMMA), polycarbonate (PC), polyethylene (PE), polypropylene (PP) and copolymers thereof.

12. The method according to the present invention, wherein the composition is applied to the surface of the substrate by spray coating, dip coating, rotational coating, doctor blading, drop coating and/or manually.

13. A **substrate** coated by the composition according to any one of claims 1 to 8 obtainable by the method according to any one of claims 10 to 12, wherein the copolymer comprised in the composition is covalently attached to the surface of the substrate.

14. The substrate according to claim 13, wherein the surface of the substrate has a water contact angle of equal or less than 30°, preferably equal or less than 25°, more preferably equal or less than 20°.

15. **Use** of a coating composition according to any one of claims 1 to 8,
a. as an anti-fogging coating for glass, glasses, safety glasses, a car windshield, a car pane, a window, a mirror, a visor, a camera lens, a microscope lens, a car headlight, a solar panel, a medical device such as an endoscope and a surgical instrument, a shower door, a bathroom tile, a greenhouse panel, and/or a face shield, and/or
b. as a primer for a water-based coating.
